# EUROPEAN PATENT SPECIFICATION

(11) **EP 4 213 491 B1**
(45) Date of publication and mention of the grant of the patent: **15.10.2025**
(21) Application number: 21866411.8
(22) Date of filing: 29.07.2021
(51) Int. Cl.: H04N 21/43, H04N 21/44, G10K 15/02

(54) **INFORMATION PROCESSING DEVICE, INFORMATION PROCESSING SYSTEM, AND INFORMATION PROCESSING METHOD**
INFORMATIONSVERARBEITUNGSVORRICHTUNG, INFORMATIONSVERARBEITUNGSSYSTEM UND INFORMATIONSVERARBEITUNGSVERFAHREN
DISPOSITIF DE TRAITEMENT D'INFORMATIONS, SYSTÈME DE TRAITEMENT D'INFORMATIONS ET PROCÉDÉ DE TRAITEMENT D'INFORMATIONS

(30) Priority: 10.09.2020 JP 2020152064
(43) Date of publication of application: 19.07.2023
(73) Proprietor: Sony Group Corporation, Tokyo 108-0075 (JP)
(72) Inventor: SUZUKI, Shiro, Tokyo 108-0075 (JP); NISHIGORI, Shuichiro, Tokyo 108-0075 (JP); TAKEDA, Hirofumi, Tokyo 108-0075 (JP); TOKUNAGA, Ryuji, Tokyo 108-0075 (JP); HATTORI, Takafumi, Tokyo 108-0075 (JP); WATANABE, Takahiro, Tokyo 108-0075 (JP)
(74) Representative: 2SPL Patentanwälte PartG mbB
(86) International application number: PCT/JP2021/028161
(87) International publication number: WO 2022/054451

(56) References cited:
- WO-A1-2016/088582
- WO-A1-2019/017218
- JP-A- 2020 046 657
- US-A1- 2018 288 650
- US-A1- 2020 053 460
- US-A1- 2020 274 817

## Description

### [Technical Field]

The present disclosure relates to an information processing device, an information processing system, and an information processing method. Particularly, the present disclosure relates to technology for reproducing reproduction data in synchronization with other reproduction apparatuses.

### [Background Art]

If communication quality deteriorates in a reproduction apparatus that reproduces reproduction data received via wireless communication, consumption of the reproduction data in reproduction processing outpaces acquisition of the reproduction data in reception processing, which may cause symptoms such as sound dropout due to insufficient reproduction data.

In order to address such a problem, PTL 1 below proposes technology for curbing sound dropout on a reception side.

### [Citation List]

### [Patent Literature]

[PTL 1]
JP 4256429B

US 2020/053460 relates to an audio rendering system. US 2020/053460 discloses a method for stereo synchronization between two paired audio sinks such as hearing aids. US 2020/053460 discloses that as the release from the frame buffer of each hearing aid is triggered by the time of receipt of a new audio packet, synchronized rendering of the audio frames by both hearing aids requires one of the hearing aids to delay release of each audio frame from the buffer by an additional delay US 2020/053460 discloses that the exchanged messages include information from which the hearing aids determine the delay Δ.

US 2018/288650 relates to a data processing method for preventing output of data from being interrupted on a reception side, the data being wirelessly transmitted and received by the reception side. Control information is generated by a reception side and added to data to generate data-with-control-information. The method of using data is controlled on the basis of the control information included in data-with-control-information.

US 2020/274817 discloses that the transmission unit transmits data control information for controlling a usage of data in the reception unit, delay control information indicating a delay mode regarding delay time when the data is processed in the reception unit, and data. The reception unit receives the data transmitted by the wireless communication, the data control information, and the delay control information, and controls the usage of the data in accordance with the data control information and the delay control information.

### [Summary]

### [Technical Problem]

However, even though the configuration of PTL 1 is intended to curb harsh sound dropout on the reception side, that is, intermittent sound dropout, if an underflow occurs in a buffer memory, processing of stopping output of audio data until the buffer memory is recovered from the underflow state is performed and thus a long silent period may occur.

In view of such problems, an object of the present disclosure is to reproduce reproduction data while ensuring synchronization between a plurality of **reproduction apparatuses while curbing occurrence of sound dropout.**

### [Solution to Problem]

The invention is defined by the appended independent claims and will be more readily understood after reading the following detailed description in conjunction with the accompanying drawings.

### [Brief Description of Drawings]

[Fig. 1]

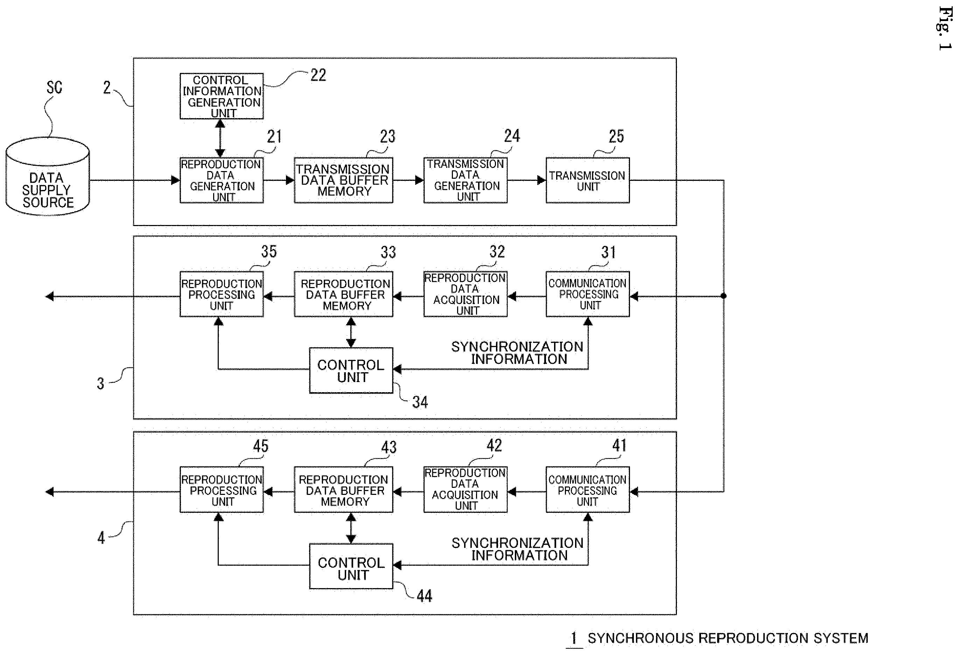

   Fig. 1 is a block diagram showing a configuration example of a synchronous reproduction system.
[Fig. 2]

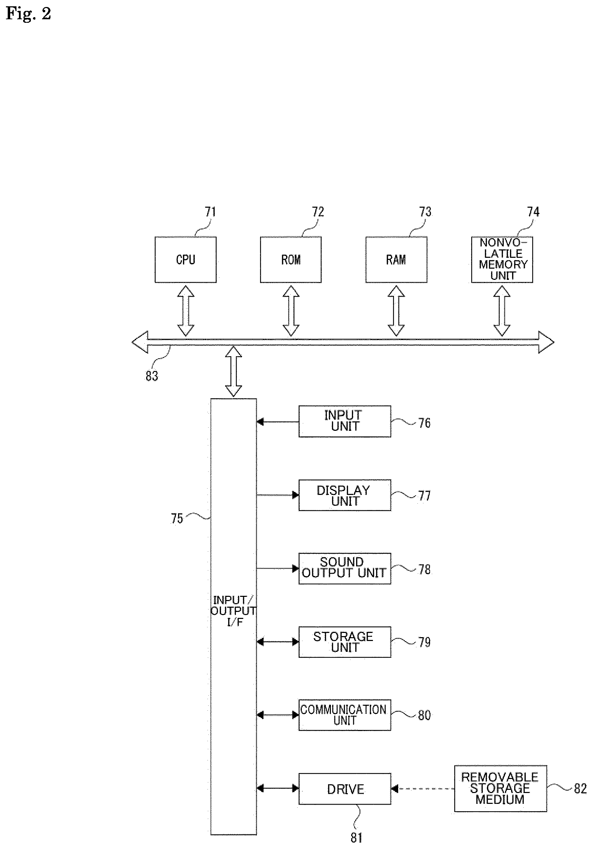

   Fig. 2 is a block diagram of a computer device.
[Fig. 3]

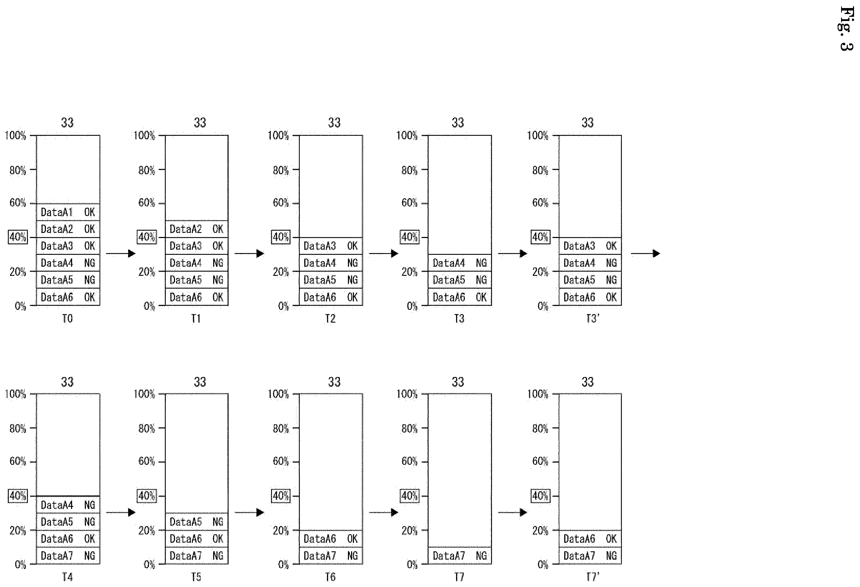

   Fig. 3 is a diagram showing state changes of a reproduction data buffer memory of an audio reproduction apparatus in a first example of duplication.
[Fig. 4]

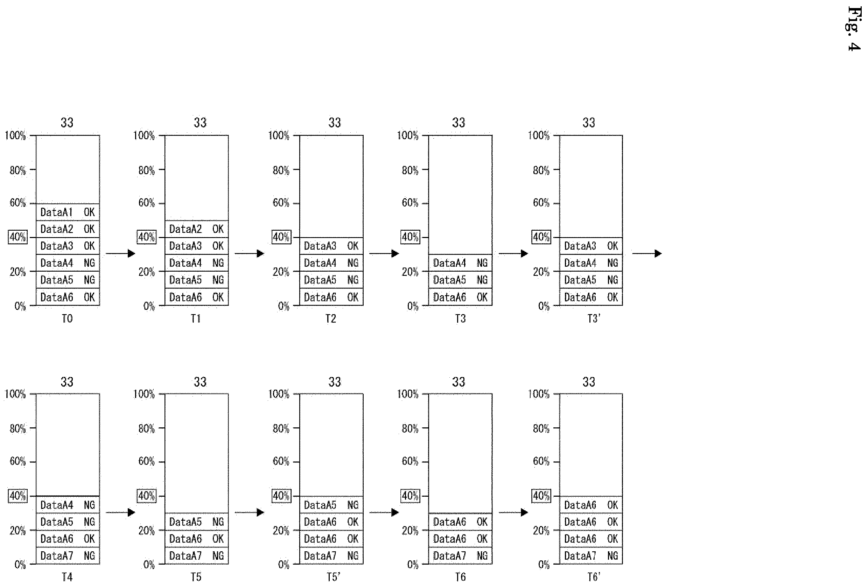

   Fig. 4 is a diagram showing state changes of the reproduction data buffer memory of the audio reproduction apparatus in a second example of duplication.
[Fig. 5]

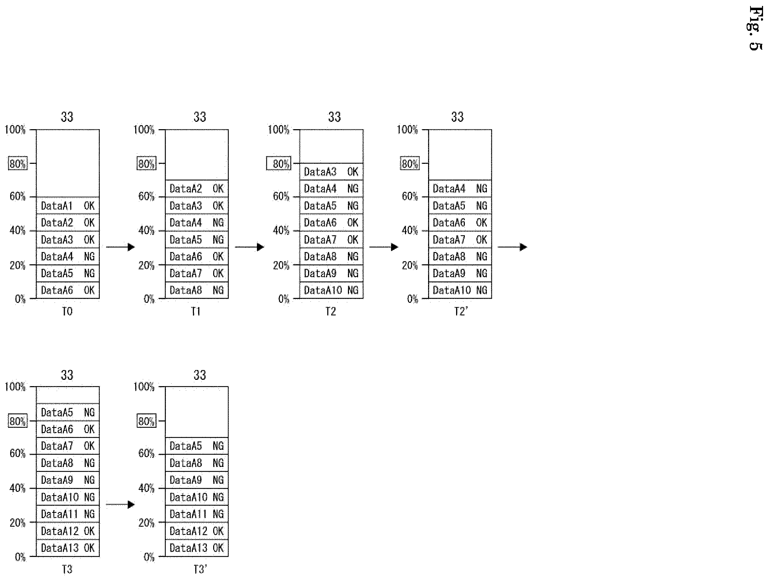

   Fig. 5 is a diagram showing state changes of the reproduction data buffer memory of the audio reproduction apparatus in a first example of discarding.
[Fig. 6]

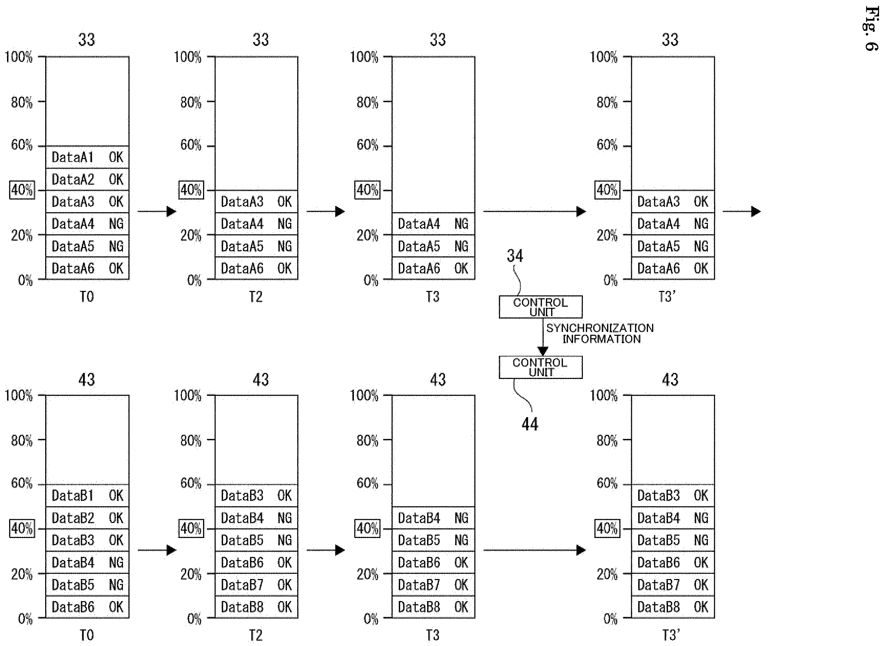

   Fig. 6 is a diagram showing state changes of each reproduction data buffer memory of the audio reproduction apparatus and a tactile reproduction apparatus in a third example of duplication.
[Fig. 7]

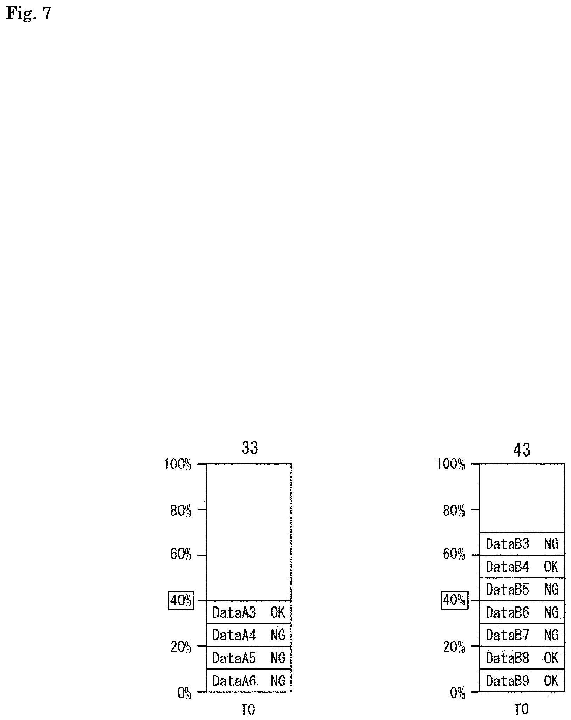

   Fig. 7 is a diagram showing another example of state changes of each reproduction data buffer memory of the audio reproduction apparatus and the tactile reproduction apparatus in the third example of duplication.
[Fig. 8]

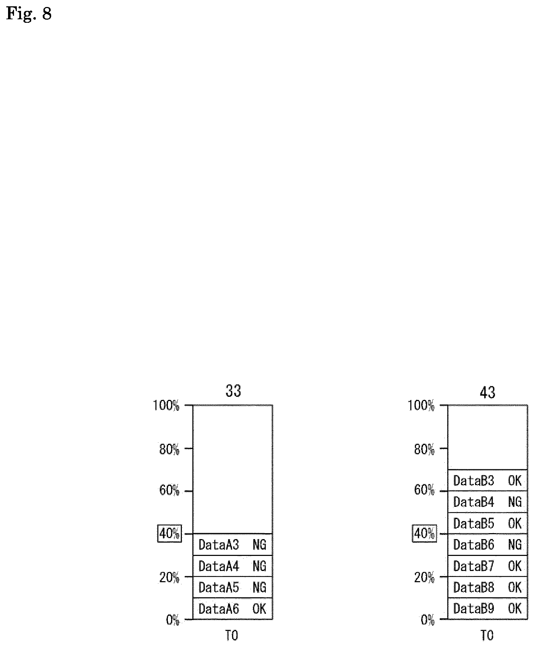

   Fig. 8 is a diagram showing another example of state changes of each reproduction data buffer memory of the audio reproduction apparatus and the tactile reproduction apparatus in the third example of duplication.
[Fig. 9]

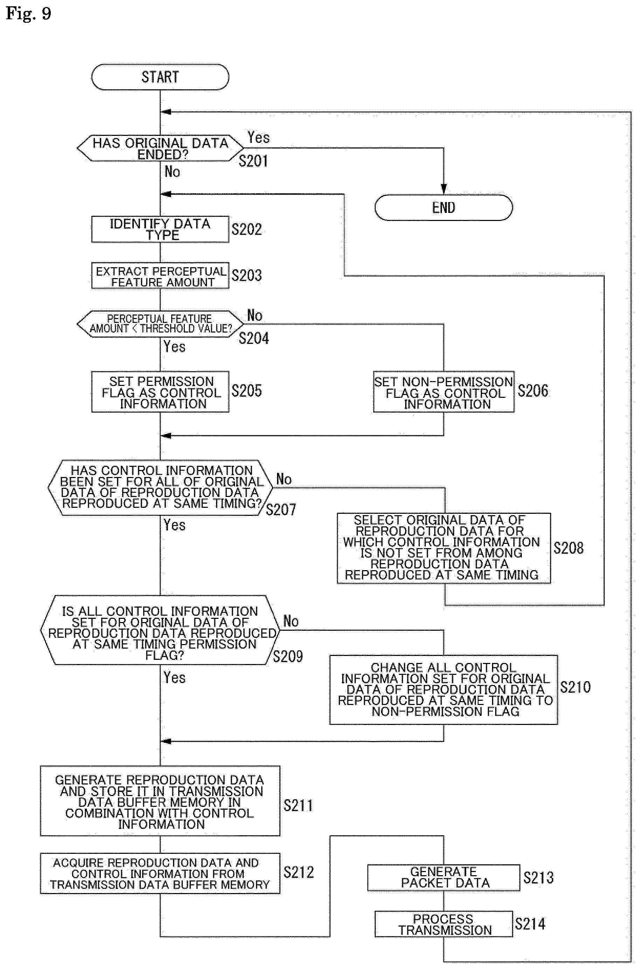

   Fig. 9 is a flowchart of a processing example of a transmission apparatus.
[Fig. 10]

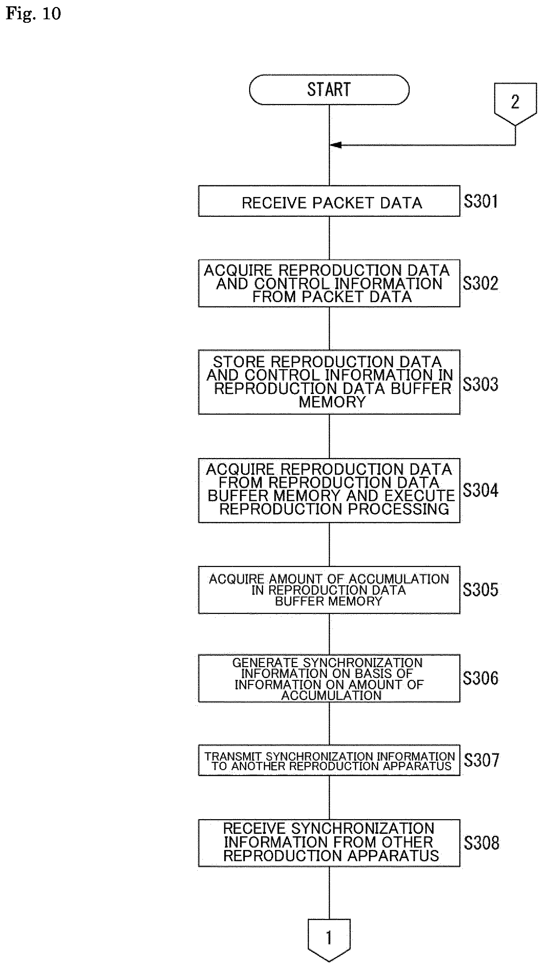

   Fig. 10 is a flowchart of processing example 1 of a reproduction apparatus.
[Fig. 11]

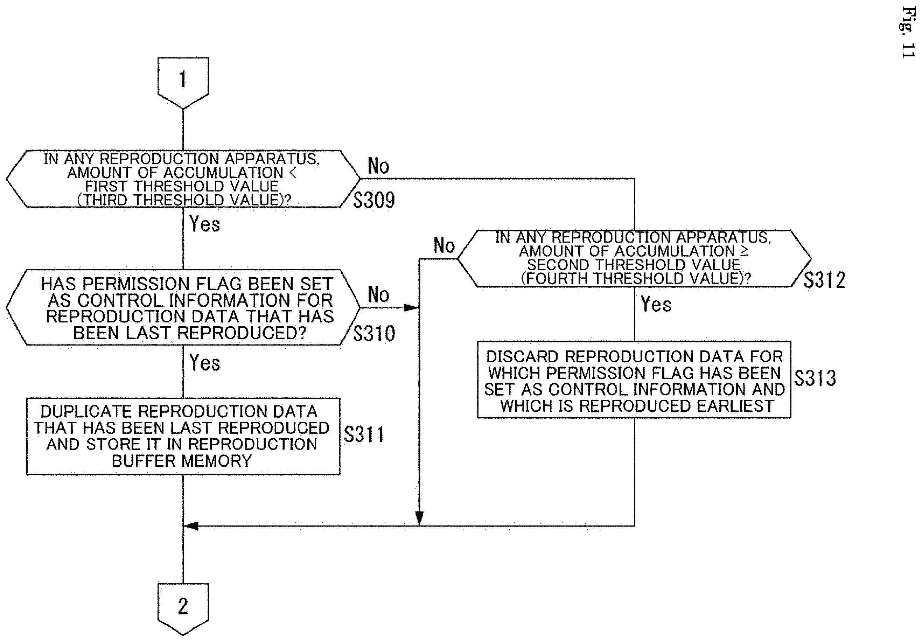

   Fig. 11 is a flowchart of processing example 1 of the reproduction apparatus.
[Fig. 12]

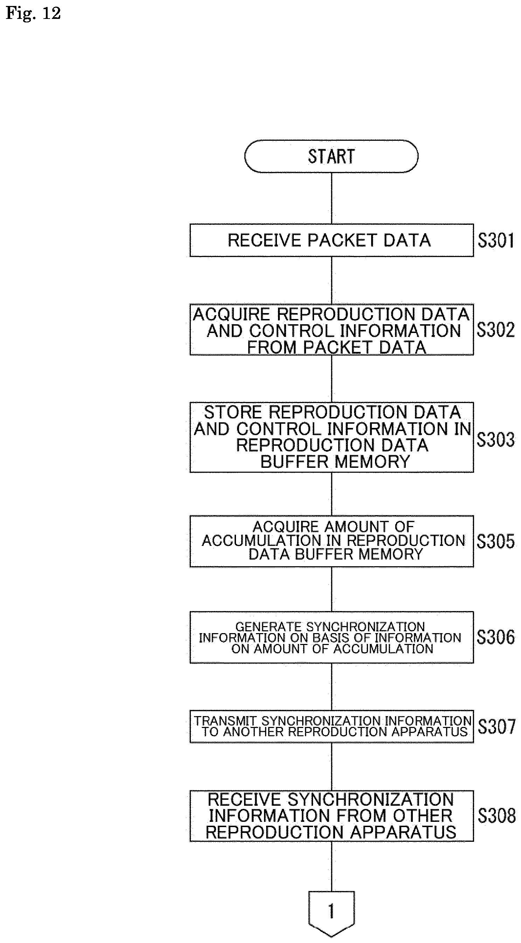

   Fig. 12 is a flowchart of processing example 2 of the reproduction apparatus.
[Fig. 13]

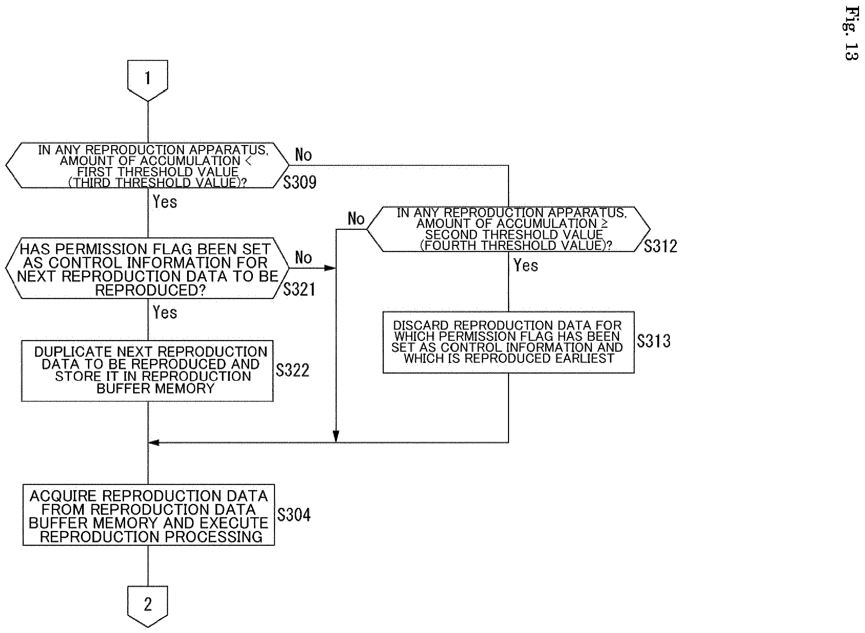

   Fig. 13 is a flowchart of processing example 2 of the reproduction apparatus.
[Fig. 14]

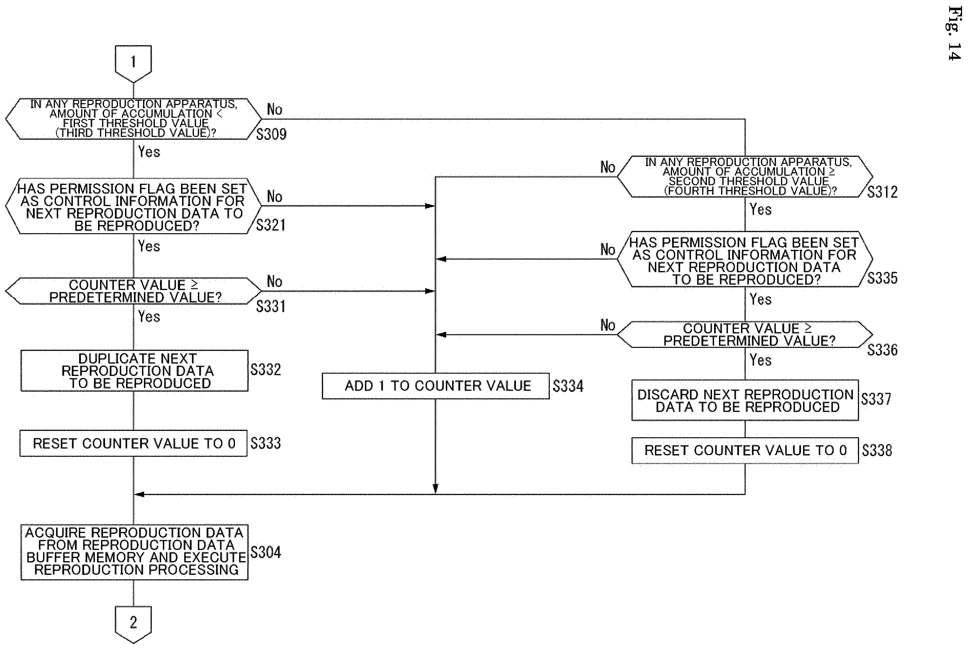

   Fig. 14 is a flowchart of processing example 3 of the reproduction apparatus.
[Fig. 15]

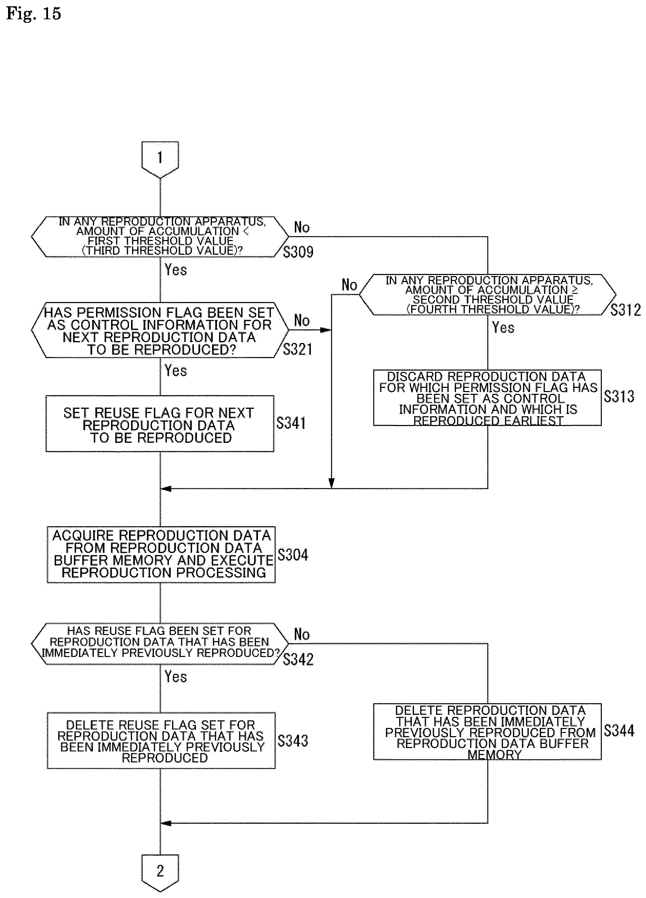

   Fig. 15 is a flowchart of processing example 4 of the reproduction apparatus.

### [Description of Embodiments]

Hereinafter, embodiments will be described in the following order.
<1. Configuration of synchronous reproduction system>
<2. Configuration of computer device>
<3. Duplication and discarding of reproduction data>
<3-1. First example of duplication>
<3-2. Second example of duplication>
<3-3. First example of discarding>
<3-4. Third example of duplication>
<4. Processing examples>
<4-1. Processing example of transmission apparatus>
<4-2. Processing example 1 of reproduction apparatus>
<4-3. Processing example 2 of reproduction apparatus>
<4-4. Processing example 3 of reproduction apparatus>
<4-5. Processing example 4 of reproduction apparatus>
<5. Modified examples>
<6. Summary>

### <1. Configuration of synchronous reproduction system>

A configuration of a synchronous reproduction system 1 as an information processing system for synchronously reproducing a plurality of pieces of data will be described with reference to Fig. 1.

The synchronous reproduction system 1 includes at least two reproduction apparatuses. Data to be reproduced by the reproduction apparatuses may be audio data, tactile data, video data, or mixed data thereof.

The synchronous reproduction system 1 in the present embodiment includes a transmission apparatus 2 that generates and transmits reproduction data, an audio reproduction apparatus 3 as a first reproduction apparatus that reproduces received audio data, and a tactile reproduction apparatus 4 as a second reproduction apparatus that reproduces tactile data.

The transmission apparatus 2 acquires original data of data to be provided to a user from a data supply source SC, which is a data supply source, generates reproduction data (audio data and tactile data) to be reproduced by the audio reproduction apparatus 3 and the tactile reproduction apparatus 4, and transmits the reproduction data to the audio reproduction apparatus 3 and the tactile reproduction apparatus 4.

For this purpose, the transmission apparatus 2 includes a reproduction data generation unit 21, a control information generation unit 22, a transmission data buffer memory 23, a transmission data generation unit 24, and a transmission unit 25.

The reproduction data generation unit 21, the control information generation unit 22, the transmission data buffer memory 23, and the transmission data generation unit 24 may be provided for each of audio data and tactile data. The components for processing for audio data and processing for tactile data are collectively described herein.

The reproduction data generation unit 21 acquires original data for generating reproduction data from the data supply source SC. For example, if the original data is audio data, it is linear pulse code modulation (LPCM) data or the like. The data supply source SC also supplies original data for generating tactile data and original data for generating video data.

The reproduction data generation unit 21 generates reproduction data by performing encoding processing and the like for generating audio data to be reproduced by the audio reproduction apparatus 3 and tactile data to be reproduced by the tactile reproduction apparatus 4. Data that has already been encoded may be supplied from the data supply source SC. In that case, the transmission apparatus 2 may not include the reproduction data generation unit 21.

The reproduction data generated by the reproduction data generation unit 21 is, for example, subdivided data whose reproduction time is extremely short (for example, several microseconds to several hundred milliseconds). One piece of reproduction data is processed into one piece of transmission data (packet data) by the transmission data generation unit which will be described later and transmitted to the reproduction apparatus.

Further, the original data acquired by the reproduction data generation unit 21 is data corresponding to one piece of reproduction data.

The reproduction data generated by the reproduction data generation unit 21 is output to the control information generation unit 22 and the transmission data buffer memory 23.

The control information generation unit 22 receives reproduction data from the reproduction data generation unit and performs analysis processing for each piece of reproduction data. The analysis processing is processing of determining whether or not duplication or discarding of the subdivided reproduction data should be permitted (permitted/not permitted) for each piece of reproduction data (transmission data). Further, when there are multiple types of target data for analysis processing, for example, when there are audio data and tactile data, analysis processing is performed for each type of target data. If there are audio data for the left ear and audio data for the right ear, they may be handled as different types of data. Specifically, in a case where an apparatus that receives and reproduces data for the left ear and an apparatus that receives and reproduces data for the right ear are separately provided, and the like, control information for audio data for the left ear and control information for audio data for the right ear may be separately generated.

If a "permission flag" for permitting duplication or discarding of transmission data is set, reproduction data extracted from the corresponding reproduction data can be duplicated or discarded in the audio reproduction apparatus 3 or the tactile reproduction apparatus 4. Specifically, reproduction data is duplicated in order to prevent data reproduction from being interrupted when reception processing in a reproduction apparatus that receives transmission data has not been performed normally for a certain period of time. Accordingly, it is possible to prevent symptoms such as sound dropout by continuously reproducing the same reproduction data.

In addition, if reproduction processing in a reproduction apparatus is delayed and reproduction data stored in the buffer memory of the reproduction apparatus overflows, a part of received reproduction data may be lost. In such a case, it is possible to prevent loss of important reproduction data by discarding reproduction data that can be safely discarded.

The control information generation unit 22 performs processing of determining whether or not such duplication or discarding of the reproduction data may be performed for each piece of reproduction data.

Determination regarding whether or not duplication or discarding of the reproduction data may be performed is performed on the basis of a perceptual feature amount that indicates how much the user perceives duplication or discarding of the reproduction data. A perceptual feature amount is calculated on the basis of, for example, a reproduction level of reproduction data (the volume in the case of audio data) or a data waveform.

Taking audio data as an example, there is little possibility that the user will feel discomfort or disorder even if silent data or audio data whose volume is lower than a predetermined level (for example, 70 dB) is discarded without being reproduced or duplicated and reproduced again. In other words, even if such reproduction data is duplicated or discarded, it is difficult for the user to perceive it. For such reproduction data, the "permission flag" indicating that duplication or discarding may be performed is set.

Further, if audio data having a large gain only at a predetermined frequency in frequency characteristics is duplicated or discarded, there is a high possibility that the user will feel disorder or discomfort. For such reproduction data, a "non-permission flag" indicating that duplication or discarding is not performed is set. In other words, the "permission flag" indicating that duplication or discarding may be performed is set for reproduction data in which various frequencies are distributed in a complicated manner in frequency characteristics. In addition, the "permission flag" indicating that duplication or discarding may be performed is set for audio data having high temporal discontinuity, audio data having high randomness, such as noise, clapping sounds, white noise, and wave sounds, and the like.

The control information generated by the control information generation unit 22 is output to the reproduction data generation unit 21. The control information generation unit 22 may output the generated control information to the transmission data generation unit 24, and the transmission data generation unit 24 may generate transmission data including the reproduction data and the control information.

The reproduction data generation unit 21 that has acquired the control information from the control information generation unit 22 pairs the reproduction data and the control information and outputs the same to the transmission data buffer memory 23.

The transmission data buffer memory 23 is a buffer memory that temporarily stores the reproduction data generated by the reproduction data generation unit 21 and the control information as a set. Each piece of reproduction data is temporarily stored in the transmission data buffer memory 23 and then appropriately read by the transmission data generation unit 24.

The transmission data generation unit 24 reads a set of reproduction data and control information from the transmission data buffer memory, and further adds information necessary for communication such as information for specifying a reproduction apparatus of a transmission destination to generate transmission data. The transmission data is generated as packet data, for example.

The transmission data generation unit 24 outputs the generated transmission data to the transmission unit 25.

The transmission unit 25 transmits the transmission data to each reproduction apparatus such as the audio reproduction apparatus 3 or the tactile reproduction apparatus 4. When communication is wireless communication, for example, the transmission unit 25 performs processing of modulating the transmission data into a radio frequency (RF) signal, and performs transmission processing using wireless communication.

The audio reproduction apparatus 3 and the tactile reproduction apparatus 4 receive the transmission data (packet data) containing audio data and tactile data as reproduction data and reproduce the reproduction data, thereby providing a user experience with a sense of unity to the user. Specifically, the audio reproduction apparatus 3 provides reproduced sound to the user by reproducing audio data. In addition, the tactile reproduction apparatus 4 provides tactile stimulation to the user by reproducing tactile data.

It is important to match timings of the reproduced sound and tactile stimulation provided by the audio reproduction apparatus 3 and the tactile reproduction apparatus 4, that is, to synchronize them with each other. For example, by providing the user with sound that the user hears at the time of colliding with an obstacle in a virtual space and tactile stimulation at the time of colliding with the obstacle at the same timing, the user can obtain a virtual experience with little difference from the real space. However, if this timing is off, it is impossible to provide the user with a satisfactory experience.

Therefore, the audio reproduction apparatus 3 and the tactile reproduction apparatus 4 are configured to be able to synchronize and reproduce reproduction data.

The audio reproduction apparatus 3 includes a communication processing unit 31, a reproduction data acquisition unit 32, a reproduction data buffer memory 33, a control unit 34, and a reproduction processing unit 35.

The communication processing unit 31 performs processing of receiving transmission data (packet data) transmitted from the transmission apparatus 2. Further, the communication processing unit 31 performs processing of transmitting/receiving synchronization information which will be described later to/from the tactile reproduction apparatus 4.

The reception data (packet data) received by the communication processing unit 31 is output to the reproduction data acquisition unit 32.

The reproduction data acquisition unit 32 acquires reproduction data and control information from the received data and outputs them to the reproduction data buffer memory 33.

The reproduction data buffer memory 33 is a buffer memory that temporarily stores the reproduction data and the control information extracted from the received data by the reproduction data acquisition unit 32. The reproduction data and the control information are temporarily stored in the reproduction data buffer memory 33 and then appropriately read by the reproduction processing unit 35 as necessary.

The control unit 34 monitors the amount of reproduction data accumulated in the reproduction data buffer memory 33. Specifically, the control unit 34 determines whether or not the amount of reproduction data accumulated in the reproduction data buffer memory 33 is less than a first threshold value. In addition, the control unit 34 generates synchronization information if it determines that the amount is less than the first threshold value. The synchronization information is information that is transmitted to another reproduction apparatus in order to match the timing of duplicating or discarding reproduction data.

For example, the synchronization information may be information indicating a reproduction data accumulation ratio (0% to 100%) in the reproduction data buffer memory 33 or may be flag information indicating that the amount of accumulation is less than the first threshold value. Alternatively, the synchronization information may be information (duplication information) indicating that reproduction data will be duplicated.

The first threshold value is a threshold value for determining whether there is a possibility that reproduction data accumulated in the reproduction data buffer memory 33 will run out.

Further, the control unit 34 determines whether or not the amount of reproduction data accumulated in the reproduction data buffer memory 33 is equal to or greater than a second threshold value (>first threshold value). Then, the control unit 34 generates synchronization information if it determines that the amount is equal to or greater than the second threshold value. For example, the synchronization information may be information indicating a reproduction data accumulation ratio (0% to 100%) in the reproduction data buffer memory 33 or flag information indicating that the amount of accumulation is equal to or greater than the second threshold value. Alternatively, the synchronization information may be information (discarding information) indicating that reproduction data will be discarded.

The second threshold value is a threshold for determining whether or not reproduction data accumulated in the reproduction data buffer memory 33 is likely to overflow.

Information on the amount of accumulation and the flag information generated by the control unit 34 are transmitted to the tactile reproduction apparatus 4 via the communication processing unit 31 as synchronization information. That is, the tactile reproduction apparatus 4 performs reproduction in synchronization with the audio reproduction apparatus 3 by appropriately duplicating or discarding reproduction data using the synchronization information received from the audio reproduction apparatus 3. The synchronization information may be transmitted from the tactile reproduction apparatus 4 to the audio reproduction apparatus 3, and the audio reproduction apparatus 3 may perform reproduction in synchronization with the tactile reproduction apparatus 4.

When the control unit 34 calculates information indicating an accumulation ratio (or information indicating the number of pieces of accumulated reproduction data) as the synchronization information, the control unit 34 may calculate the accumulation ratio as the synchronization information at regular time intervals and transmit the synchronization information to the tactile reproduction apparatus 4 via the communication processing unit 31.

The reproduction processing unit 35 appropriately acquires audio data as reproduction data from the reproduction data buffer memory 33 and performs reproduction processing. Accordingly, reproduced sound is emitted to the user. The reproduction processing unit 35 performs reproduction processing according to control of the control unit 34.

Specifically, the control unit 34 duplicates the reproduction data when the reproduction data accumulated in the reproduction data buffer memory 33 is less than the first threshold value. The reproduction processing unit 35 reproduces the duplicated reproduction data to reproduce the same audio data. That is, dropout of sound is prevented.

The control unit 34 refers to the control information regarding the reproduction data at the time of duplicating the reproduction data. If the control information of the reproduction data is the "non-permission flag" indicating that duplication cannot be performed, the reproduction data is not duplicated. Then, reproduction data having control information set to the "permission flag" indicating that duplication is permitted is duplicated. Accordingly, it is possible to perform reproduction control for preventing sound dropout without causing the user to feel disorder or discomfort.

Further, the control unit 34 discards the reproduction data if the reproduction data accumulated in the reproduction data buffer memory 33 is equal to or greater than the second threshold value. Accordingly, the reproduction data buffer memory 33 is prevented from overflowing.

The control unit 34 refers to the control information regarding the reproduction data at the time of discarding the reproduction data. If the control information of the reproduction data is the "non-permission flag" indicating that the reproduction data cannot be discarded, the reproduction data is not discarded. Then, reproduction data having control information set to the "permission flag" indicating that reproduction data can be discarded is discarded. Accordingly, it is possible to perform reproduction control without causing the user to feel disorder or discomfort.

The control unit 34 performs reproduction control in consideration of not only the amount of reproduction data accumulated in the reproduction data buffer memory 33 included in the audio reproduction apparatus 3 but also the amount of reproduction data accumulated in the reproduction data buffer memory included in the tactile reproduction apparatus 4.

Specifically, the control unit 34 acquires synchronization information from the tactile reproduction apparatus 4 via the communication processing unit 31. Then, when the synchronization information received from the tactile reproduction apparatus 4 indicates that duplication of reproduction data is required, the control unit 34 duplicates the reproduction data even if the reproduction data accumulated in the reproduction data buffer memory 33 is not less than the first threshold value. Accordingly, for example, only reproduction data in the tactile reproduction apparatus 4 is duplicated, and reproduction of audio data is prevented from being performed in advance. At this time, the reproduction data that is a target for duplication processing performed by the control unit 34 is data for which the "permission flag" is set as the control information.

Further, when the synchronization information received from the tactile reproduction apparatus 4 indicates that the reproduction data needs to be discarded, even if the reproduction data accumulated in the reproduction data buffer memory 33 is not equal to or greater than the second threshold value, the reproduction data is discarded. Accordingly, for example, only the reproduction data in the tactile reproduction apparatus 4 is discarded, and reproduction of audio data is prevented from being delayed. At this time, the reproduction data that is a target for discarding processing performed by the control unit 34 is data for which the "permission flag" is set as the control information.

The tactile reproduction apparatus 4 includes a communication processing unit 41, a reproduction data acquisition unit 42, a reproduction data buffer memory 43, a control unit 44, and a reproduction processing unit 45.

Each unit performs the same processing as that of each unit included in the audio reproduction apparatus 3. The difference is that a reproduction target is tactile data instead of audio data. Therefore, detailed description is omitted to avoid redundant description.

However, threshold values used for the control unit 44 provided in the tactile reproduction apparatus 4 to determine whether or not the amount of reproduction data accumulated in the reproduction data buffer memory 43 is appropriate are a third threshold value instead of the first threshold value and a fourth threshold value instead of the second threshold value. The first threshold value and the third threshold value may be the same numerical value (e.g., 40%). Further, the second threshold value and the fourth threshold value may be the same numerical value (e.g., 80%).

The audio reproduction apparatus 3 may include a configuration for reproducing audio data for the left ear and a configuration for reproducing audio data for the right ear. For example, the audio reproduction apparatus 3 includes the communication processing unit 31, the reproduction data acquisition unit 32, the reproduction data buffer memory 33, and the control unit 34, and may include a reproduction processing unit 35 for the right ear, and a reproduction processing unit 35 for the left ear.

Further, when the audio reproduction apparatus 3 is an apparatus in which an earphone for the left ear and an earphone for the right ear are separated, the audio reproduction apparatus 3 may include the communication processing unit 31, the reproduction data acquisition unit 32, the reproduction data buffer memory 33, the control unit 34, and the reproduction processing unit 35 for each of the left ear and the right ear. Further, the audio reproduction apparatus 3 for reproducing audio data for the left ear and the audio reproduction apparatus 3 for reproducing audio data for the right ear may be separately provided.

Similarly, when the tactile reproduction apparatus 4 includes a plurality of tactile presentation units connected by wires, the tactile reproduction apparatus 4 may commonly include the communication processing unit 41, the reproduction data acquisition unit 42, the reproduction data buffer memory 43, and the control unit 44 for the tactile presentation units, and include the reproduction processing unit 45 for each tactile presentation unit.

Further, when the tactile reproduction apparatus 4 for the upper body and the tactile reproduction apparatus 4 for the lower body are provided, and the respective tactile reproduction apparatuses 4 are wirelessly connected, each tactile reproduction apparatus 4 may include the communication processing unit 41, the reproduction data acquisition unit 42, the reproduction data buffer memory 43, the control unit 44, and the reproduction processing unit 45.

### <2. Configuration of computer device>

The transmission apparatus 2, the audio reproduction apparatus 3, and the tactile reproduction apparatus 4 included in the synchronous reproduction system 1 include components as computer devices in order to have the functions described above. Each apparatus does not need to have all the components described below and may have only some thereof.

As shown in Fig. 2, a CPU 71 of each apparatus execute various types of processing according to a program stored in a ROM 72 or a nonvolatile memory unit 74 such as an electrically erasable programmable read-only memory (EEP-ROM) or a program loaded from a storage unit 79 to a RAM 73. The RAM 73 appropriately stores not only data used for the CPU 71 to perform various processes but also necessary data or the like.

The CPU 71, the ROM 72, the RAM 73, and the nonvolatile memory unit 74 are connected via a bus 83. An input/output interface 75 is also connected to the bus 83.

An input unit 76 constituted by an operator or an operation device is connected to the input/output interface 75.

For example, various operators or operation devices such as a keyboard, a mouse, keys, a dial, a touch panel, a touch pad, and a remote controller are assumed as the input unit 76.

A user operation is detected by the input unit 76, and a signal corresponding to the input operation is interpreted by the CPU 71.

Further, a display unit 77 including an LCD, an organic EL panel, or the like, and a sound output unit 78 including a speaker or the like are connected to the input/output interface 75 as one body or separate bodies.

The display unit 77 is a display unit that performs various displays, and is configured of, for example, a display device provided in the housing of the computer device or a separate display device connected to the computer device. The display unit 77 displays an image for various kinds of image processing, a processing target moving image, or the like on a display screen in response to an instruction from the CPU 71. The display unit 77 displays various operation menus, icons, and messages, that is, a graphical user interface (GUI) in response to an instruction from the CPU 71.

The storage unit 79 constituted by a hard disk, a solid-state memory, or the like, or a communication unit 80 constituted by a modem or the like may be connected to the input/output interface 75.

The communication unit 80 performs communication processing via a transmission path such as the Internet and communication such as wired/wireless communication or bus communication with various types of apparatuses.

A drive 81 is also connected to the input/output interface 75 as necessary, and a removable storage medium 82 such as a magnetic disk, an optical disc, a magneto-optical disc, or a semiconductor memory is appropriately mounted in the drive 81.

Using the drive 81, it is possible to read data files such as an image file, various computer programs, or the like from the removable storage medium 82. The read data file is stored in the storage unit 79 or an image or a sound included in the data file is output to the display unit 77 or the sound output unit 78. A computer program or the like read from the removable storage medium 82 is installed to the storage unit 79 as necessary.

In this computer device, for example, software for processing in the present embodiment can be installed through network communication using the communication unit 80 or via the removable storage medium 82. Alternatively, the software may be stored in advance in the ROM 72, the storage unit 79, or the like.

As the CPU 71 performs processing operations on the basis of various programs, necessary information processing and communication processing as the transmission apparatus 2, the audio reproduction apparatus 3, and the tactile reproduction apparatus 4 are executed.

The information processing device constituting the transmission apparatus 2, the audio reproduction apparatus 3, and the tactile reproduction apparatus 4 is not limited to a single computer device as shown in Fig. 2, and may be configured by systemization of a plurality of computer devices. A plurality of computer devices may be a system using a LAN or the like or may be remotely located by a VPN or the like using the Internet or the like. A plurality of information processing devices may include information processing devices as a server group (cloud) that can be used by a cloud computing service.

### <3. Duplication and discarding of reproduction data>

### <3-1. First example of duplication>

A first example of variation in the amount of audio data accumulated in the reproduction data buffer memory 33 of the audio reproduction apparatus 3 and duplication of audio data will be described.

Fig. 3 shows changes in the amount of audio data accumulated in the reproduction data buffer memory 33 at time T0, time T1 after a predetermined time from time T0, time T2 after a predetermined time from time T1, ... and time T7.

At time T0, six pieces of audio data (DataA1 to DataA6) of audio data A1 to audio data A6 are accumulated in the reproduction data buffer memory 33. Among the audio data A1 to A6, the audio data A1 should be reproduced earliest. That is, the audio data A6 is reproduction data received last by the audio reproduction apparatus 3.

For simplification of explanation, capacity occupied by one piece of audio data is set to 10% in storage capacity of the reproduction data buffer memory 33.

The above-described first threshold value in the reproduction data buffer memory 33 is set to 40%. That is, when the amount of audio data accumulated in the reproduction data buffer memory 33 is less than 40%, the audio data is duplicated.

"OK" and "NG" information attached to the side of audio data in Fig. 3 indicate flags indicating permission/non-permission of duplication. That is, audio data set to "OK" is regarded as audio data for which the above-described "permission flag" has been set, and audio data set to "NG" is regarded as audio data for which the above-described "non-permission flag" has been set.

At time T1 after a time corresponding to a reproduction time length of one piece of audio data has elapsed as a predetermined time from time T0, the audio data A1 has been reproduced and deleted from the reproduction data buffer memory 33.

At time T2 after a predetermined time has elapsed from time T1, the audio data A2 has been reproduced and deleted from the reproduction data buffer memory 33.

At time T3 after a predetermined time has elapsed from time T2, the audio data A3 has been reproduced and deleted from the reproduction data buffer memory 33. Here, the amount of audio data accumulated in the reproduction data buffer memory 33 reaches 30%, which is less than 40% that is the first threshold value.

The control unit 34 determines that the amount of audio data accumulated in the reproduction data buffer memory 33 is insufficient. Further, the audio data A3 that has been reproduced this time is audio data for which the "permission flag" has been set. Therefore, the control unit 34 duplicates the audio data A3 (state at time T3' in Fig. 3).

At time T4 after a predetermined time has elapsed from time T3, the audio reproduction apparatus 3 newly receives audio data A7, and the duplicated audio data A3 has been reproduced and deleted again from the reproduction data buffer memory 33.

The amount of accumulated audio data at time T4 is 40%, which is not less than 40% that is the first threshold value. Therefore, duplication of audio data is not performed.

At time T5 after a predetermined time has elapsed from time T4, the audio data A4 has been reproduced and deleted from the reproduction data buffer memory 33. Here, the amount of audio data accumulated in the reproduction data buffer memory 33 reaches 30%, which is less than 40% that is the first threshold value.

However, the "non-permission flag" has been set to the audio data A4 that has been reproduced this time. Therefore, the control unit 34 does not duplicate the audio data A4. That is, the amount of audio data accumulated in the reproduction data buffer memory 33 remains at 30%.

At time T6 after a predetermined time has elapsed from time T5, the audio data A5 has been reproduced and deleted from the reproduction data buffer memory 33. Here, the amount of audio data accumulated in the reproduction data buffer memory 33 reaches 20%, which is less than 40% that is the first threshold value.

However, the "non-permission flag" has been set to the audio data A5 that has been reproduced this time. Therefore, the control unit 34 does not duplicate the audio data A5. That is, the amount of audio data accumulated in the reproduction data buffer memory 33 remains at 20%.

At time T7 after a predetermined time has elapsed from time T6, the audio data A6 has been reproduced and deleted from the reproduction data buffer memory 33. Here, the amount of audio data accumulated in the reproduction data buffer memory 33 reaches 10%, which is less than 40% that is the first threshold value.

Further, the audio data A6 that has been reproduced this time is audio data for which the "permission flag" has been set. Therefore, the control unit 34 duplicates the audio data A6 to restore the amount of audio data accumulated in the reproduction data buffer memory 33 from 10% to 20% (state at time T7' in Fig. 3).

A plurality of pieces of audio data A6 may be duplicated at the timing of time T7' such that the amount of accumulation becomes equal to or greater than the first threshold value, or one piece of audio data A6 may be duplicated at the timing of time T8' upon determining that the amount of accumulation is less than the first threshold value again at the timing of time T8 that is not shown.

Further, when the amount of accumulation becomes less than the first threshold value, duplication of audio data may be performed until the amount is restored to a value (e.g., a reference value) different from the first threshold value. For example, the first threshold value is set to 40% and the reference value is set to 60%. Accordingly, the amount of accumulation near the first threshold value is maintained for a long time and thus determination processing and duplication processing are prevented from being frequently executed.

Instead of duplicating audio data, canceling processing of deleting the audio data can also be used. That is, by not executing processing of deleting the audio data A3 from the reproduction data buffer memory 33 when the audio data A3 has been reproduced at the timing of time T3, the same effect can be obtained.

### <3-2. Second example of duplication>

A second example of duplication is an example of duplicating audio data earlier than the first example of duplication. Although the same state as in the first example of duplication appears in Fig. 4 used to describe the second example of duplication, description thereof will be omitted.

At time T0, six pieces of audio data A1 to audio data A6 are accumulated in the reproduction data buffer memory 33. Further, one piece of audio data is data corresponding to 10% of the amount of accumulation in the reproduction data buffer memory 33.

Since the operation is the same as in the first example of duplication until time T4, description is omitted.

At time T5 after a predetermined time has elapsed from time T4, the audio data A4 has been reproduced and deleted from the reproduction data buffer memory 33. Here, the amount of audio data accumulated in the reproduction data buffer memory 33 reaches 30%, which is less than 40% that is the first threshold value.

Here, the control unit 34 executes duplication processing on the audio data. Audio data for which the "permission flag" has been set as control information and which is reproduction data to be reproduced earliest is selected as a duplication processing target from among the audio data accumulated in the reproduction data buffer memory 33.

The "non-permission flag" is set for the audio data A5, and the "permission flag" is set for the audio data A6. Therefore, the control unit 34 selects the audio data A6 as a duplication target.

The duplicated audio data A6 is stored in the reproduction data buffer memory 33 such that it is reproduced immediately before or after the audio data A6 of the duplication source. That is, the audio data stored in the reproduction data buffer memory 33 is reproduced in the order of the audio data A5, the audio data A6, the audio data A6, and the audio data A7 at time T5'.

At time T6 after a predetermined time has elapsed from time T5, the audio data A5 has been reproduced and deleted from the reproduction data buffer memory 33. Here, the amount of audio data accumulated in the reproduction data buffer memory 33 reaches 30% which is less than 40% that is the first threshold value again.

Therefore, the control unit 34 executes duplication processing on the audio data again. Among the audio data stored in the reproduction data buffer memory 33, the audio data for which the "permission flag" has been set as the control information and which is reproduction data to be reproduced earliest is the audio data A6, and thus the audio data A6 is selected as a duplication processing target.

The audio data accumulated in the reproduction data buffer memory 33 is reproduced in the order of the audio data A6, the audio data A6, the audio data A6, and the audio data A7 at time T6'.

Although the audio data A6 is scheduled to be reproduced three times at time T6', if the amount of audio data accumulated in the reproduction data buffer memory 33 has been restored to the first threshold value or more by receiving new audio data before the reproductions are performed, the duplicated audio data A6 may be deleted without being reproduced. Accordingly, the temporarily duplicated audio data A6 need not be reproduced.

### <3-3. First example of discarding>

A first example of changes in the amount of audio data accumulated in the reproduction data buffer memory 33 of the audio reproduction apparatus 3 and discarding of audio data will be described.

Fig. 5 shows changes in the amount of audio data accumulated in the reproduction data buffer memory 33 at time T1, time T2, and time T3 each being a time after a predetermined time has elapsed from time T0.

Further, as in the case of duplication, capacity occupied by one piece of audio data is assumed to be 10% of the storage capacity of the reproduction data buffer memory 33.

The above-described second threshold value in the reproduction data buffer memory 33 is set to 80%. That is, when the amount of audio data accumulated in the reproduction data buffer memory 33 reaches 80% or more, audio data is discarded.

In this example, "discarding" means that audio data is deleted without being reproduced, and "deleting" means that audio data is deleted because it is reproduced and thus becomes unnecessary.

"OK" and "NG" information attached to the side of audio data in Fig. 5 represent flags indicating permission/non-permission of discarding. That is, audio data set to "OK" is regarded as audio data for which the above-described "permission flag" has been set, and audio data set to "NG" is regarded as audio data for which the above-described "non-permission flag" has been set.

At time T1 after a predetermined time has elapsed from time T0, the audio data A1 has been reproduced and deleted from the reproduction data buffer memory 33. Further, two pieces of audio data A7 and A8 newly received by the audio reproduction apparatus 3 have been added to the reproduction data buffer memory 33.

At this point in time, the amount of audio data accumulated in the reproduction data buffer memory 33 is 70% which is less than 80% that is the second threshold value, and thus the audio data is not discarded.

At time T2 after a predetermined time has elapsed from time T1, the audio data A2 has been reproduced and deleted from the reproduction data buffer memory 33. Further, two pieces of audio data A9 and A10 newly received by the audio reproduction apparatus 3 have been added to the reproduction data buffer memory 33.

At this point in time, the amount of audio data accumulated in the reproduction data buffer memory 33 is 80% which is equal to or higher than 80% that is the second threshold value. Therefore, the control unit 34 determines discarding of the audio data.

Here, the control unit 34 selects, from among the audio data accumulated in the reproduction data buffer memory 33, audio data for which the "permission flag" has been set as control information and which is reproduction data to be reproduced earliest as a discarding processing target. That is, the audio data A3 is selected as a discarding target and discarded (state at time T2' in Fig. 5).

At time T3 after a predetermined time has additionally elapsed from time T2, the audio data A3 has been discarded, and thus the audio data A4 to be reproduced next has been reproduced and deleted from the reproduction data buffer memory 33. Further, three pieces of audio data A11, A12, and A13 newly received by the audio reproduction apparatus 3 have been added to the reproduction data buffer memory 33.

At this point in time, the amount of audio data accumulated in the reproduction data buffer memory 33 is 90% which is equal to or greater than 80% that is the second threshold value. Therefore, the control unit 34 determines discarding of the audio data.

In order to reduce the amount of audio data accumulated in the reproduction data buffer memory 33 to less than the second threshold value, it is necessary to discard two pieces of audio data. Therefore, the control unit 34 selects, from among the audio data accumulated in the reproduction data buffer memory 33, two pieces of audio data for which the "permission flag" has been set as the control information and which are reproduction data to be reproduced earlier as discarding processing targets in order. That is, the audio data A6 and the audio data A7 are selected as discarding targets and discarded (state at time T3' in Fig. 5).

Although a case of comparing the amount of audio data accumulated in the reproduction data buffer memory 33 with the threshold value each time audio data is reproduced in the first example of discarding, audio data may be appropriately discarded by comparing the amount of accumulation with the threshold value more frequently. Accordingly, it is possible to reduce the possibility of receiving a large amount of audio data at once and unintentionally losing audio data.

### <3-4. Third example of duplication>

A third example of duplication is an example in which reproduction data is duplicated in both the audio reproduction apparatus 3 and the tactile reproduction apparatus 4 in response to decrease in the amount of audio data accumulated in the reproduction data buffer memory 33 of the audio reproduction apparatus 3.

The upper part of Fig. 6 shows accumulation states of the audio data A1 to A6 in the reproduction data buffer memory 33 of the audio reproduction apparatus 3. The lower part of Fig. 6 shows accumulation states of tactile data B1 to B8 in the reproduction data buffer memory 43 of the tactile reproduction apparatus 4.

At time T0, six pieces of audio data have been accumulated in the reproduction data buffer memory 33 of the audio reproduction apparatus 3, and six pieces of tactile data have been accumulated in the reproduction data buffer memory 43 of the tactile reproduction apparatus 4.

At time T2 after twice the predetermined time has elapsed from time T0, the reproduced audio data A1 and audio data A2 have been deleted from the reproduction data buffer memory 33 of the audio reproduction apparatus 3, and the reproduced tactile data B1 and tactile data B2 have been deleted from the reproduction data buffer memory 43 of the tactile reproduction apparatus 4.

Further, at time T2, the tactile reproduction apparatus 4 is in a state in which new tactile data B7 and B8 have been added to the reproduction data buffer memory 43. It is assumed that the audio reproduction apparatus 3 has failed to receive new audio data A7 and A8.

Since the amount of audio data accumulated in the reproduction data buffer memory 33 of the audio reproduction apparatus 3 is equal to or greater than 40% that is the first threshold value, the control unit 34 does not duplicate the audio data.

Similarly, since the amount of audio data accumulated in the reproduction data buffer memory 43 of the tactile reproduction apparatus 4 is equal to or greater than 40% that is the third threshold value, the control unit 44 does not duplicate the tactile data.

At time T3 after a predetermined time has elapsed from time T2, the reproduced audio data A3 has been deleted from the reproduction data buffer memory 33 of the audio reproduction apparatus 3, and the reproduced tactile data B3 has been deleted from the reproduction data buffer memory 43 of the tactile reproduction apparatus 4. Further, reception of new audio data A7 and A8 has not yet been performed.

Since the amount of audio data accumulated in the reproduction data buffer memory 33 of the audio reproduction apparatus 3 is less than 40% that is the first threshold value, the control unit 34 determines duplication of the audio data. Therefore, the control unit 34 notifies the tactile reproduction apparatus 4 of information on the amount (30%) of accumulated audio data as synchronization information and flag information indicating the duplication of the audio data via the communication processing unit 31. That is, the audio reproduction apparatus 3 transmits the synchronization information to the tactile reproduction apparatus 4.

On the other hand, since the amount of audio data accumulated in the reproduction data buffer memory 43 of the tactile reproduction apparatus 4 is equal to or greater than 40% that is the third threshold value, the control unit 44 may not duplicate tactile data originally.

However, since it is found that reproduction data is duplicated in the audio reproduction apparatus 3 according to the synchronization information received from the audio reproduction apparatus 3, the reproduction data buffer memory 43 of the tactile reproduction apparatus 4 determines tactile data duplication processing.

The control unit 34 of the audio reproduction apparatus 3 selects, as audio data that is a duplication target, audio data for which the "permission flag" has been set as the control information and which is reproduced earliest.

Similarly, the control unit 44 of the tactile reproduction apparatus 4 selects, as tactile data that is a duplication target, tactile data for which the "permission flag" has been set as the control information and which is reproduced earliest.

That is, the control unit 34 of the audio reproduction apparatus 3 selects the audio data A3 as a duplication target, and the control unit 44 of the tactile reproduction apparatus 4 selects the tactile data B3 as a duplication target. Accordingly, the control unit 34 and the control unit 44 enter the state indicated by time T3'.

In the state shown in Fig. 6, the "permission flag" has been set for both the audio data A3 and the tactile data B3, which are reproduced at the same timing, and thus the audio reproduction apparatus 3 and the tactile reproduction apparatus 4 are synchronized with each other in reproduction even if duplication or discarding of reproduction data has been performed.

However, there is also a case in which the "permission flag" has been set for only one of the audio data A3 and the tactile data B3. In that case, reproduction data having reproduction timing as close as possible may be duplicated.

For example, as shown in Fig. 7, a case in which audio data A3, A4, A5, and A6 are accumulated in the reproduction data buffer memory 33, the "permission flag" is set for only the audio data A3, tactile data B3, B4, B5, B6, B7, B8, and B9 are accumulated in the reproduction data buffer memory 43, and the "permission flag" is set for the tactile data B4, B8, and B9 is conceived.

When the audio data A3 is reproduced in this state, duplication of the audio data A3 is determined on the basis of the above-described conditions. In addition, it is desirable to determine duplication of the tactile data B4 having reproduction timing closest to that of the audio data A3 among the tactile data for which the "permission flag" has been set in the tactile reproduction apparatus 4.

Further, as described in the second example of duplication, when reproduction data is duplicated early, the state shown in Fig. 8 can be conceived.

Specifically, the audio data A3, A4, A5, and A6 are accumulated in the reproduction data buffer memory 33, the "permission flag" is set for only the audio data A6, the tactile data B3, B4, B5, B6, B7, B8, and B9 are accumulated in the reproduction data buffer memory 43, and the "permission flag" is set for the tactile data B3, B5, B7, B8, and B9.

When the audio data A3 is reproduced in this state, duplication of the audio data A3 is determined on the basis of the above-described conditions. In addition, it is desirable to determine duplication of either the tactile data B5 or the tactile data B7 having reproduction timing closest to that of the audio data A6 among the tactile data for which the "permission flag" has been set in the tactile reproduction apparatus 4.

Several methods are conceivable in order to prevent reproduction data that is a duplication processing or discarding processing target from being reproduced at different timings.

As one method, a method of setting the permission flag in a case where the permission flag can be set for all reproduction data reproduced at the same timing and uniformly setting the non-permission flag for all the reproduction data in a case where the non-permission flag should be set for at least one piece of the reproduction data reproduced at the same timing when the control information generation unit 22 of the transmission apparatus 2 adds the permission flag or the non-permission flag to the reproduction data as control information can be conceived.

Accordingly, the states shown in Figs. 7 and 8 cannot exist, and thus apparatuses on the reproduction side (the audio reproduction apparatus 3 and the tactile reproduction apparatus 4) can duplicate or discard reproduction data without considering the control information regarding each other's reproduction data.

As another method, a method of including information for specifying reproduction data that is a duplication or discarding target in synchronization information transmitted from a certain reproduction apparatus to another reproduction apparatus when the certain reproduction apparatus determines that reproduction data will be duplicated or discarded can be conceived.

Accordingly, it is possible to select reproduction data that is a duplication or discarding target from reproduction data reproduced at the same timing.

If there is no reproduction data that is permitted to be duplicated or discarded among reproduction data reproduced at the same timing, it is desirable to select reproduction data having reproduction timing as close as possible as described above.

Further, when there are a reproduction apparatus that reproduces audio data for the left ear, a reproduction apparatus that reproduces audio data for the right ear, and a reproduction apparatus that reproduces tactile data, and these apparatuses reproduce reproduction data in synchronization with each other, all flags are set to the permission flag and it may be difficult to select reproduction data to be reproduced at the same timing. In particular, it is obvious that the more reproduction apparatuses there are, the more difficult it becomes.

In that case, it is desirable to select reproduction data that is a duplication target or a discarding target according to whether or not the user easily perceives a reproduction timing deviation.

For example, with respect to audio data for the left ear and audio data for the right ear for which the user relatively easily perceives a reproduction timing deviation, reproduction data reproduced at the same timing is selected as a duplication target or a discarding target, and with respect to tactile data for which a deviation is difficult to perceive, a duplication target or a discarding target may be selected from reproduction data (tactile data) having reproduction timing deviations within a predetermined time.

Accordingly, it is possible to duplicate or discard reproduction data such that the user does not feel disorder or discomfort as much as possible.

### <4. Processing examples>

### <4-1. Processing example of transmission apparatus>

An example of processing executed by the transmission apparatus 2 to realize each function described above will be described with reference to Fig. 9. Processing shown in Fig. 9 is processing executed by an arithmetic processing unit such as the CPU 71 included in the transmission apparatus 2. In this example, the CPU 71 of the transmission apparatus 2 is simply referred to as an "arithmetic processing unit".

Further, as in the above example, an example in which the transmission apparatus 2 acquires original data of audio data and original data of tactile data from the data supply source SC, converts them into small data units (packet data), and transmits them to each reproduction apparatus will be described.

In step S201, the arithmetic processing unit determines whether or not the original data supplied from the data supply source SC has ended. If there is no more original data supplied from the data supply source SC, it is determined that the original data has ended, and if there is still original data supplied from the data supply source SC, it is determined that the original data has not ended.

If it is determined that the original data supplied from the data supply source has ended, the arithmetic processing unit ends the series of processing shown in Fig. 9.

On the other hand, if it is determined in step S201 that the original data has not ended, the arithmetic processing unit identifies the data type of the acquired original data in step S202. In the above example, it is identified whether the original data is original data of audio data or original data of tactile data. Then, the arithmetic processing unit performs processing after step S203 according to the data type of the acquired original data.

In step S203, the arithmetic processing unit extracts (or calculates) a perceptual feature amount with respect to the acquired original data.

The perceptual feature amount is information indicating how easily (or hardly) the user perceives duplication or discarding of reproduction data generated from original data.

In step S204, the arithmetic processing unit determines whether or not the perceptual feature amount is less than a threshold value. Original data having a perceptual feature amount less than the threshold value is reproduction data that is hardly perceived by the user even if generated reproduction data is duplicated or discarded. In the case of audio data, it includes silent data, audio data having a volume set to a predetermined level or less, and the like. Further, in the case of tactile data, it includes tactile data having a tactile stimulation presentation intensity set to a predetermined intensity or less, and the like. Further, In the case of video data, it includes an image having generally low luminance, data having a small difference from previous video data, and the like.

If the perceptual feature amount is less than the threshold value, the arithmetic processing unit sets the "permission flag" as control information of the original data in step S205.

On the other hand, if the perceptual feature amount is equal to or greater than the threshold value, the arithmetic processing unit sets the "non-permission flag" as the control information of the original data in step S206.

Next, in step S207, the arithmetic processing unit determines whether or not the control information has been set for all original data of reproduction data reproduced at the same timing.

For example, in the example shown in Fig. 6, reproduction data reproduced at the same timing are the audio data A1 and the tactile data B1. Further, the audio data A2 and the tactile data B2 are reproduction data reproduced at the same timing.

Here, the audio data A1 and the tactile data B1 will be described as an example. When processing from step S201 to step S206 is executed with the original data of the audio data A1 as a processing target, and processing proceeds to step S207, the control information has not yet been set for the original data of the tactile data B1. In this case, determination in step S207 is "No".

If the determination in step S207 is "No", the arithmetic processing unit selects data for which the control information is not set, that is, the original data of the tactile data B1, from among the reproduction data reproduced at the same timing in step S208. Then, the arithmetic processing unit performs processing from step S202 to step S206 on the original data of the tactile data B1 and sets the "permission flag" or the "non-permission flag" as control information.

If either the "permission flag" or the "non-permission flag" has been set as the control information for the original data of both the audio data A1 and the tactile data B1, the determination in step S207 is "Yes".

If the determination in step S207 is "Yes", the arithmetic processing unit proceeds to step S209 and determines whether or not all of the control information set for the original data of the reproduction data reproduced at the same timing is the "permission flag". In the above example, if the "permission flag" has been set for each piece of the original data of the audio data A1 and the tactile data B1, the determination in step S209 is "Yes", and if the "non-permission flag" has been set for at least one thereof, the determination in step S209 is "No".

If the determination is "Yes" in step S209, the "permission flag" has already been set as the control information for all the target original data (the original data of each piece of the audio data A1 and the tactile data B1), that is, there is no need to unify the control information, and thus processing proceeds to step S211 without processing the control information.

On the other hand, if the determination is "No" in step S209, there is original data for which the "non-permission flag" has been set as the control information among the target original data, and thus processing proceeds to step S210 to change the control information.

In step S210, the arithmetic processing unit resets the "non-permission flag" as the control information for all the target original data. That is, for the original data for which the "permission flag" has been set as the control information, processing of changing the control information to the "non-permission flag" is performed.

In step S211, the arithmetic processing unit generates reproduction data from the original data. Specifically, the audio data A1 and the tactile data B1 reproduced at the same timing are generated as reproduction data.

The generated reproduction data (audio data A1 and tactile data B1) is stored in the transmission data buffer memory 23 in combination with the control information.

Next, in step S212, the arithmetic processing unit acquires a set of reproduction data and control information from the transmission data buffer memory 23, generates packet data as transmission data in step S213, and performs transmission processing in step S214. Through this transmission processing, the packet data is transmitted to reproduction apparatuses such as the audio reproduction apparatus 3 and the tactile reproduction apparatus 4.

As the transmission apparatus 2 performs processing from step S201 to step S214, audio data and tactile data as transmission data are transmitted to the reproduction apparatuses together with the control information.

### <4-2. Processing example 1 of reproduction apparatus>

An example of processing executed by a reproduction apparatus to realize each function described above will be described with reference to Fig. 10 and the like. Although processing described herein will be described as an example of processing executed by an arithmetic processing unit such as the CPU 71 of the audio reproduction apparatus 3, the processing is also processing executed by an arithmetic processing unit such as the CPU 71 of the tactile reproduction apparatus 4.

That is, although the flowcharts of Figs. 10 and 11 show that a certain reproduction device performs processing using information received from the transmission apparatus 2 or another reproduction device, the other reproduction device is the tactile reproduction apparatus 4 when the certain reproduction device is the audio reproduction apparatus 3, and the other reproduction device is the audio reproduction apparatus 3 when the certain reproduction device is the tactile reproduction apparatus 4.

In the case of processing executed by the CPU 71 of the tactile reproduction apparatus 4, audio reproduction data may be replaced with tactile reproduction data, the reproduction data buffer memory 33 may be replaced with the reproduction data buffer memory 43, and the control unit 34 may be replaced with the control unit 44.

Further, in the description, the CPU 71 of the audio reproduction apparatus 3 is simply referred to as an "arithmetic processing unit".

The arithmetic processing unit receives packet data, which is transmission data transmitted from the transmission apparatus 2, in step S301.

In step S302, the arithmetic processing unit acquires audio data, which is reproduction data, and control information from the received packet data.

In step S303, the arithmetic processing unit stores the reproduction data and the control information as a set in the reproduction data buffer memory 33.

In step S304, the arithmetic processing unit acquires reproduction data from the reproduction data buffer memory 33 and executes reproduction processing. Although the reproduced reproduction data is deleted from the reproduction data buffer memory 33, the data is likely to be duplicated in subsequent processing, and thus it is stored together with the control information in any storage unit of the audio reproduction apparatus 3.

In step S305, the arithmetic processing unit acquires (calculates) the amount of reproduction data accumulated in the reproduction data buffer memory 33.

In step S306, the arithmetic processing unit generates synchronization information on the basis of information on the acquired amount of accumulation. The example shown in Fig. 10 is an example in which synchronization information is periodically transmitted to another reproduction device (for example, the tactile reproduction apparatus 4) regardless of the amount of accumulation. Therefore, synchronization information is generated unconditionally. If the synchronization information is transmitted only when the amount of accumulation is less than the first threshold value or is equal to or greater than the second threshold value, that is, only when reproduction data is duplicated or discarded in the audio reproduction apparatus 3, processing of comparing the amount of accumulation with each threshold value may be performed before step S306 is executed, and synchronization information generation processing of step S306 may be appropriately performed according to the comparison result.

In step S307, the arithmetic processing unit transmits the synchronization information to another reproduction device (for example, the tactile reproduction apparatus 4).

Further, the arithmetic processing unit receives synchronization information from the other reproduction device in step S308.

In step S309 of Fig. 11, the arithmetic processing unit that has obtained the synchronization information of itself (audio reproduction apparatus 3) and the synchronization information of the other reproduction device including itself (tactile reproduction apparatus 4) determines whether or not the amount of accumulation in the buffer memory of any of the reproduction apparatuses including the arithmetic processing unit (audio reproduction apparatus 3 or the tactile reproduction apparatus 4) is less than the threshold value. The amount of accumulation in the audio reproduction apparatus 3 is compared using the first threshold value, and the amount of accumulation in the tactile reproduction apparatus 4 is compared using the third threshold value instead of the first threshold value. However, the first threshold value and the third threshold value may be the same value (e.g., 40%).

When the amount of accumulation in the audio reproduction apparatus 3 is less than the first threshold value, when the amount of accumulation in the tactile reproduction apparatus 4 is less than the third threshold value, or when both are satisfied, the amount of reproduction data accumulated in any buffer memory is decreasing and thus there is concern about depletion of the reproduction data. In this case, the arithmetic processing unit proceeds to step S310 and determines whether or not the "permission flag" has been set as control information of reproduction data that has been last reproduced.

If the "permission flag" has been set as the control information of the reproduction data, the arithmetic processing unit duplicates the reproduction data that has been last reproduced, that is, the reproduction data deleted from the reproduction data buffer memory 33 and stored in another storage unit in step S304, and re-stores it in the reproduction data buffer memory 33 in step S311. At the time of storing the duplicated reproduction data in the reproduction data buffer memory 33, the duplicated reproduction data is selected as the next reproduction data.

On the other hand, if it is determined in step S310 that the "non-permission flag" has been set as the control information of the reproduction data, the arithmetic processing unit returns to processing of step S301 without executing the duplication processing of step S311. That is, the arithmetic processing unit receives packet data from the transmission apparatus 2, reproduces reproduction, and appropriately duplicates or discards the reproduction data.

Depending on the quality of communication between the transmission apparatus 2 and the audio reproduction apparatus 3, packet data may not be received from the transmission apparatus 2. In that case, the reproduction processing and the like of step S304 are executed without performing reception processing of step S301. In order to realize such processing, a configuration in which packet reception processing, reproduction data reproduction processing, processing of determining whether or not reproduction data needs to be duplicated or discarded, duplication processing, and discarding processing are executed in multitasking may be adopted.

Fig. 11 is referred back to for description.

If it is determined in step S309 that the amounts of accumulation in the buffer memories of all reproduction apparatuses (the audio reproduction apparatus 3 and the tactile reproduction apparatus 4) are equal to or greater than the threshold values (the first threshold value and the third threshold value), the arithmetic processing unit performs processing of determining whether or not the reproduction data should be discarded in step S312. Specifically, the arithmetic processing unit determines whether or not the amount of accumulation in the buffer memory in any of reproduction apparatuses including itself is equal to or greater than the threshold value. The amount of accumulation in the audio reproduction apparatus 3 is compared using the second threshold value, and the amount of accumulation in the tactile reproduction apparatus 4 is compared using the fourth threshold value instead of the second threshold value. However, the second threshold value and the fourth threshold value may be the same value (for example, 80%).

When the amount of accumulation in the audio reproduction apparatus 3 is equal to or greater than the second threshold value, when the amount of accumulation in the tactile reproduction apparatus 4 is equal to or greater than the fourth threshold value, or when both are satisfied, the amount of reproduction data accumulated in any buffer memory is increasing and thus the reproduction data is likely to be lost unintentionally. In this case, the arithmetic processing unit proceeds to step S313 and discards reproduction data for which the permission flag has been set as the control information and which is reproduced earliest. Accordingly, the amount of accumulation in the buffer memory can be reduced.

The number of pieces of reproduction data to be discarded in step S313 does not have to be one. For example, a plurality of pieces of reproduction data may be selected such that the amount of reproduction data accumulated in the reproduction data buffer memory 33 becomes less than the second threshold value.

After execution of step S313 or in step S312, the arithmetic processing unit determines that the amounts of accumulation in the buffer memories of all the reproduction apparatuses (the audio reproduction apparatus 3 and the tactile reproduction apparatus 4) are less than the threshold values (the second threshold value and the fourth threshold value), and then returns to processing of step S301 again.

By executing processing shown in Figs. 10 and 11, it is possible to realize changes in the amount of accumulation in the reproduction data buffer memory 33 of the audio reproduction apparatus 3 as shown in Figs. 3 and 5.

In the examples shown in Figs. 10 and 11, even if reproduction data needs to be duplicated, the reproduction data is not duplicated if the "non-permission flag" has been set for reproduction data that has been last reproduced. In this case, after processing is looped several times, at the timing when reproduction data for which the "permission flag" has been set has been reproduced, duplication processing is executed on the corresponding reproduction data.

However, if reproduction data needs to be duplicated as shown in Fig. 4, duplication processing may be performed for reproduction data other than the reproduction data that has been last reproduced. For example, instead of steps S310 and S311 of Fig. 11, reproduction data having the earliest reproduction timing among reproduction data for which the "permission flag" has been set may be selected as a duplication target and duplication processing may be performed thereon.

### <4-3. Processing example 2 of reproduction apparatus>

In processing example 1, after reproducing reproduction data, it is determined whether or not the reproduction data needs to be duplicated or discarded, and the reproduced reproduction data is duplicated if it needs to be duplicated.

In processing example 2, it is determined whether or not reproduction data needs to be duplicated or discarded, and the reproduction data is reproduced after appropriate duplication or discard processing is performed thereon.

The same processing as in processing example 1 is denoted by the same step number, and description thereof will be omitted. Further, although an arithmetic processing unit of the audio reproduction apparatus 3 is exemplified as a processing unit that executes processing, the arithmetic processing unit of the tactile reproduction apparatus 4 may execute the processing.

The arithmetic processing unit acquires reproduction data and control information from received packet data by executing processing from step S301 to step S303 in Fig. 12, and stores them in the reproduction data buffer memory 33.

By executing processing from step S305 to step S307, the arithmetic processing unit acquires (calculates) information on the amount of accumulation in the reproduction data buffer memory 33, generates synchronization information, and transmits the synchronization information to another reproduction apparatus (tactile reproduction apparatus 4). Further, the arithmetic processing unit receives synchronization information from the other reproduction apparatus by executing processing of step S308.

The arithmetic processing unit executes processing shown in Fig. 13 on the basis of synchronization information acquired from the reproduction data buffer memory 33 and the synchronization information received from the other reproduction apparatus.

Specifically, the arithmetic processing unit determines whether or not the amount of accumulation in the buffer memory of any reproduction apparatus (the audio reproduction apparatus 3 or the tactile reproduction apparatus 4) including itself is less than a threshold value in step S309.

When the amount of accumulation in the audio reproduction apparatus 3 is less than the first threshold value, when the amount of accumulation in the tactile reproduction apparatus 4 is less than the third threshold value, or both are satisfied, the arithmetic processing unit determines whether or not the "permission flag" has been set as control information of the next reproduction data to be reproduced in step S321.

If the "permission flag" has been set as the control information of the next reproduction data to be reproduced, the arithmetic processing unit executes processing of duplicating the next reproduction data to be reproduced and storing it in the reproduction data buffer memory 33 in step S322.

Then, the arithmetic processing unit acquires reproduction data from the reproduction data buffer memory 33 and executes reproduction processing in step S304. That is, the number of pieces of reproduction data that are duplication targets temporarily increases by one (for example, from one to two) by being duplicated in step S322 and decreases by one (for example, from two to one) by being deleted from the reproduction data buffer memory 33 in step S304.

If the "non-permission flag" has been set as the control information of the next reproduction data to be reproduced, and duplication of the reproduction data is not appropriate, reproduction processing of step S304 is executed without duplicating the reproduction data (processing of step S322).

Further, if it is determined that the amounts of accumulation in the buffer memories of all the reproduction apparatuses (the audio reproduction apparatuses 3 and the tactile reproduction apparatus 4) are equal to or greater than the threshold values (the first threshold value and the third threshold value) in step S309, reproduction data need not be duplicated, and thus the arithmetic processing unit performs processing of determining whether or not the reproduction data should be discarded in step S312. In addition, if it is determined that the reproduction data needs to be discarded, the arithmetic processing unit discards the reproduction data in step S313.

On the other hand, if it is determined that neither duplication nor discarding of the reproduction data is required, that is, if the determination is "No" in step S309 and the determination is "No" in step S312, only duplication of the reproduction data is executed.

### <4-4. Processing example 3 of reproduction apparatus>

Processing example 3 is an example in which reproduction data is not duplicated or discarded multiple times in a short period of time. Duplication or discarding of reproduction data is not continuously performed to thereby prevent the user from feeling disorder or discomfort.

Meanwhile, the same processing as processing described in processing example 1 and processing example 2 is denoted by the same step number and description thereof will be omitted. Further, as in the previous examples, processing is executed by the arithmetic processing unit such as the CPU 71 of the audio reproduction apparatus 3.

The arithmetic processing unit executes processing of steps S301, S302, S303, S305, S306, S307, and S308 of Fig. 12, extracts reproduction data and control information from packet data, stores them in the reproduction data buffer memory 33, generates synchronization information from information on the amount of accumulation, and transmits the synchronization information to another reproduction device. The arithmetic processing unit also receives synchronization information from the other reproduction device.

Subsequently, the arithmetic processing unit performs processing of step S309 in Fig. 14 and determines whether or not the reproduction data needs to be duplicated. When at least one of the amount of accumulation in the reproduction data buffer memory 33 and the amount of accumulation in the reproduction data buffer memory 43 is less than the threshold value, it is determined that the reproduction data will be duplicated. That is, the arithmetic processing unit confirms the control information of the next reproduction data to be reproduced in step S321, and determines whether or not the "permission flag" has been set.

If the "permission flag" has been set, the arithmetic processing unit proceeds to step S331 and determines whether or not a counter value is equal to or greater than a predetermined value.

Here, the counter value will be described. The counter value has an initial value of 0 and is incremented by 1 each time reproduction data is reproduced without being duplicated or discarded. That is, the counter value can be regarded as the elapsed time from when previous duplication or discarding has been performed.

If the counter value is equal to or greater than the predetermined value, that is, if a predetermined time or longer has elapsed from previous duplication or discarding, the arithmetic processing unit proceeds to step S332, duplicates the next reproduction data to be reproduced, and stores it in the reproduction data buffer memory 33. Then, the arithmetic processing unit resets the counter value to 0 in step S333.

Subsequently, the arithmetic processing unit acquires reproduction data from the reproduction data buffer memory 33, executes reproduction processing thereon, and deletes the reproduced reproduction data from the reproduction data buffer memory 33 in step S304. Accordingly, the accumulation state of the reproduction data in the reproduction data buffer memory 33 returns to the state before the duplication processing in step S332 and the reproduction processing in step S304.

If it is determined in step S331 that the counter value is less than the predetermined value, that is, if not much time has elapsed from previous duplication or discarding of the reproduction data, the arithmetic processing unit proceeds to step S334, adds 1 to the counter value, and performs reproduction processing on the reproduction data in step S304.

Accordingly, the amount of reproduction data accumulated in the reproduction data buffer memory 33 is reduced.

If it is determined in step S309 that the reproduction data need not be duplicated, the arithmetic processing unit determines whether or not the reproduction data needs to be discarded in step S312.

If it is determined that the reproduction data needs to be discarded in any of the buffer memories, the arithmetic processing unit determines whether or not the "permission flag" has been set as the control information for the next reproduction data to be reproduced in step S335.

If the "permission flag" has been set, the arithmetic processing unit determines whether or not the counter value is equal to or greater than the predetermined value in step S336.

If the counter value is equal to or greater than the predetermined value, even if reproduction data discarding processing is performed here, it is difficult for the user to perceive it, and thus the arithmetic processing unit proceeds to step S337 and discards the next reproduction data to be reproduced. Then the arithmetic processing unit resets the counter value to 0 in step S338, and then performs reproduction processing in step S304. That is, one piece of reproduction data is discarded and the next reproduction data is reproduced.

Further, if it is determined that the reproduction data need not be discarded in step S312, if it is determined that the "non-permission flag" has been set to the control information of the next reproduction data to be reproduced in step S335, or if it is determined that the counter value is less than the predetermined value in step S336, the counter value is incremented by 1 in step S334 without discarding the reproduction, and then reproduction processing is performed in step S304.

This prevents the reproduction data from being frequently duplicated or discarded and prevents the same reproduction data from being duplicated many times.

### <4-5. Processing example 4 of reproduction apparatus>

In processing example 4, reproduction data is reused instead of being duplicated. In the following description, an example modified from processing example 2 of the reproduction apparatus will be described. As in the previous examples, processing is executed by an arithmetic processing unit such as the CPU 71 of the audio reproduction apparatus 3.

The arithmetic processing unit acquires reproduction data and control information from packet data by performing a series of processing shown in Fig. 12, stores it in the reproduction data buffer memory 33, and transmits/receives synchronization information to/from another reproduction apparatus.

Subsequently, in step S309 of Fig. 15, the arithmetic processing unit determines whether or not the amount of accumulation in the buffer memory of each reproduction apparatus has decreased. If it is determined that the amount of accumulation in the buffer memory has decreased and it is necessary to take action (determination of "Yes" in step S309), the arithmetic processing unit determines whether or not the "permission flag" has been set to the control information of the next reproduction data to be reproduced in step S321.

If the "permission flag" has been set, the arithmetic processing unit sets a "reuse flag" for the next reproduction data to be reproduced in step S341.

The reuse flag is a flag assigned to reproduction data that has been determined to be reproduced multiple times. The reuse flag can be assigned only to reproduction data for which the "permission flag" has been set as the control information.

In step S304, the arithmetic processing unit acquires reproduction data from the reproduction data buffer memory 33 and performs reproduction processing.

In step S342, the arithmetic processing unit determines whether or not the reuse flag has been set for reproduction data that has been immediately previously reproduced.

If the reuse flag has been set, the arithmetic processing unit deletes the reuse flag set for the reproduction data that has been immediately previously reproduced in step S343.

On the other hand, if it is determined that the "non-permission flag" has been set as the control information of the next reproduction data to be reproduced in step S321, the arithmetic processing unit does not set the reuse flag and execute reproduction processing of step S304. In this case, the arithmetic processing unit determines that the reuse flag has not been set for the reproduction data that has been immediately previously reproduced in determination processing of step S342, and performs processing of deleting the reproduction data that has been immediately previously reproduced from the reproduction data buffer memory 33 in step S344.

Deletion processing of step S344 is also executed when it is determined that the amount of accumulation in the buffer memory has not decreased (determination of "No" in step S309) in step S309.

By using the reuse flag in this way, it is possible to avoid duplication of the reproduction data.

Such a processing mode can be realized without using the reuse flag. For example, reproduction processing may be performed such that the reproduction data is not deleted from the reproduction data buffer memory 33 in a case where "Yes" is determined in both determination processing in steps S309 and S321 shown in Fig. 15, and the reproduction data may be deleted from the reproduction data buffer memory 33 after reproduction processing in other cases.

The aspect of reusing reproduction data instead of duplicating it as in this example can also be applied to processing examples 1 and 3 of the reproduction apparatus by using the reuse flag.

### <5. Modified examples>

In each of the above-described examples, the transmission apparatus 2 includes the control information generation unit 22, and the control information generation unit 22 analyzes reproduction data and generates control information of the reproduction data. That is, each reproduction apparatus checks control information for each piece of reproduction data and determines whether the reproduction data can be duplicated or discarded.

However, the transmission apparatus 2 may not include the control information generation unit 22 and may not generate control information. In this case, each reproduction apparatus can select any piece of reproduction data as a target for duplication processing or discarding processing according to the amount of reproduction data accumulated in the buffer memory.

Even with such a configuration, synchronized reproduction processing can be performed while solving problems such as sound skipping due to lack of reproduction data in a plurality of reproduction apparatuses.

In each of the above-described examples, no upper limit is set for the number of times of duplicating reproduction data that is a duplication target. However, in order to prevent the same reproduction data from being excessively duplicated, an upper limit of the number of times of duplication may be set. For example, determination processing for checking the number of times of duplication may be performed between step S310 and step S311 in Fig. 11, and when the number of times of duplication does not reach the upper limit, duplication processing of step S311 may be performed. Further, when duplication processing of step S311 has been executed, processing of adding 1 to a counter value for counting the number of times of duplication is performed.

Further, although an example in which there are two reproduction apparatuses has been described in the above-described embodiments, similar effects can be obtained even if there are three or more reproduction apparatuses. In that case, for example, it is desirable to transmit synchronization information to two or more reproduction apparatuses as other reproduction apparatuses in processing of step S307 in Fig. 10 and to receive synchronization information from the two or more reproduction apparatuses as other reproduction apparatuses in processing of step S308. Further, in processing of steps S309 and S312 in Fig. 11, processing of comparing the amount of accumulation with the threshold value for each reproduction apparatus is performed.

Accordingly, it is possible to perform reproduction processing while ensuring a synchronized state of a plurality of reproduction apparatuses.

The configuration described above is suitable when reproduction data is transmitted and received between the transmission apparatus 2, the audio reproduction apparatus 3, and the tactile reproduction apparatus 4 through wireless communication. However, the configuration can also be applied when reproduction data is transmitted and received through wired communication. That is, in the case of duplicating or discarding reproduction data in order to prevent sound dropout or the like caused by deterioration of the quality of wired communication, it is possible to perform reproduction processing according to a plurality of reproduction apparatuses while ensuring a synchronized state by applying the configuration of the present disclosure.

### <6. Summary>

As described in each of the above-described examples, a reproduction apparatus (audio reproduction apparatus 3) as an information processing device includes a reproduction data reception unit (communication processing unit 31) that receives first reproduction data (audio data), a synchronization information management unit (control unit 34) that receives synchronization information from another reproduction apparatus (tactile reproduction apparatus 4) that reproduces second reproduction data (tactile data) in synchronization with the first reproduction data, and a reproduction processing unit 35 that reproduces the first reproduction data on the basis of the received synchronization information (information indicating the amount of accumulation and a flag information).

The first reproduction data and the second reproduction data are, for example, tactile data, audio data, and video data. Further, a combination thereof does not have to be a combination of data of the same type. For example, the first reproduction data may be tactile data, and the second reproduction data may be audio data. Of course, both the first reproduction data and the second reproduction data may be tactile data, or both may be audio data.

According to this configuration, it is possible to reproduce the first reproduction data in synchronization with the second reproduction data reproduced by the other reproduction apparatus.

Therefore, for example, deviation between the first reproduction data and the second reproduction data can be reduced and provided to the user, and a user experience with a sense of unity can be provided.

This configuration can be applied to the tactile reproduction apparatus 4. Specifically, a reproduction apparatus (tactile reproduction apparatus 4) as an information processing device may include a reception unit (communication processing unit 41) that receives the first reproduction data (tactile data), a synchronization information management unit (control unit 44) that receives synchronization information from another reproduction apparatus (audio reproduction apparatus 3) that reproduces the second reproduction data (audio data) in synchronization with the first reproduction data, and a reproduction processing unit 45 that reproduces the first reproduction data on the basis of the received synchronization information.

The description in this summary can be applied to the tactile reproduction apparatus 4 through similar replacement.

As described in the configuration of the synchronous reproduction system, the reproduction apparatus (audio reproduction apparatus 3) as an information processing device may include a first buffer memory (reproduction data buffer memory 33) that stores the received first reproduction data (audio data).

By accumulating the first reproduction data in the first buffer memory, it is possible to reproduce the first reproduction data without delay even if reception of the first reproduction data is interrupted for a certain period of time. Therefore, it is possible to provide a satisfactory reproduction environment with few data interruptions.

As described in the configuration of the synchronous reproduction system, in the reproduction apparatus (audio reproduction apparatus 3) as an information processing device, the synchronization information received by the synchronization information management unit (control unit 34) may be information on the amount of accumulation in a second buffer memory (reproduction data buffer memory 43) included in the other reproduction apparatus (tactile reproduction apparatus 4) for temporarily storing the second reproduction data (tactile data).

Accordingly, the reproduction processing unit 35 can change the reproduction mode according to how much the second reproduction data reproduced by the other reproduction apparatus is accumulated in the second buffer memory. Accordingly, for example, when reproduction of data is interrupted in the other reproduction apparatus, it is possible to maintain synchronization of reproduction of the first reproduction data and the second reproduction data by interrupting reproduction of the first reproduction data in the same manner and to prevent the user from feeling discomfort or disorder.

As described in the configuration of the synchronous reproduction system, the synchronization information received by the synchronization information management unit (control unit 34) in the reproduction apparatus (audio reproduction apparatus 3) as an information processing device may be information on the ratio of the amount of accumulation to the memory size of the second buffer memory (reproduction data buffer memory 43) included in the other reproduction apparatus (tactile reproduction apparatus 4).

Accordingly, the synchronization information management unit can specifically ascertain the amount of accumulated second reproduction data reproduced by the other reproduction apparatus.

Therefore, it is possible to reproduce the first reproduction data on the basis of the amount of accumulated second reproduction data.

As described in the configuration of the synchronous reproduction system, the synchronization information received by the synchronization information management unit (control unit 34) in the reproduction apparatus (audio reproduction apparatus 3) as an information processing device may be flag information indicating whether or not the amount of accumulation in the second buffer memory (reproduction data buffer memory 43) included in the other reproduction apparatus (tactile reproduction apparatus 4) is below a threshold value (third threshold value).

Accordingly, the synchronization information management unit can ascertain whether or not the amount of the second reproduction data reproduced by the other reproduction apparatus is small.

Since the flag information has a small amount of data, it is possible to shorten a time required to transmit and receive the synchronization information and to reduce the area required to store the received synchronization information, thereby reducing the burden on the information processing device.

As described in the configuration of the synchronous reproduction system, the reproduction apparatus (audio reproduction apparatus 3) as an information processing device may include a reproduction data management unit (control unit 34) that duplicates and discards the first reproduction data (audio data) stored in the first buffer memory (reproduction data buffer memory 33).

It is possible to increase the amount of accumulation in the first buffer memory by the reproduction data management unit duplicating the first reproduction data in the first buffer memory. In addition, it is possible to reduce the amount of accumulation in the first buffer memory by the reproduction data management unit discarding the first reproduction data in the first buffer memory.

That is, it is possible to maintain a constant amount of the first reproduction data accumulated in the first buffer memory according to processing of the reproduction data management unit. Accordingly, it is possible to prevent reproduction of the first reproduction data from being delayed.

As described in each example, in the reproduction apparatus (audio reproduction apparatus 3) as an information processing device, the reproduction data management unit (control unit 34) may duplicate the first reproduction data (audio data) when the amount of accumulation in the first buffer memory (reproduction data buffer memory 33) is less than the first threshold value.

This prevents the amount of the first reproduction data accumulated in the first buffer memory from falling below the first threshold value.

Therefore, delay in reproduction of the first reproduction data is prevented.

As described in each example, in the reproduction apparatus (audio reproduction apparatus 3) as an information processing device, the reproduction data management unit (control unit 34) may discard the first reproduction data (audio data) when the amount of accumulation in the first buffer memory (reproduction data buffer memory 33) is equal to or greater than the second threshold value. This prevents the amount of the first reproduction data accumulated in the first buffer memory from exceeding the second threshold value.

Accordingly, overflow of the first reproduction data in the first buffer memory can be avoided, and appropriate reproduction of the first reproduction data can be performed.

As described in each example, in the reproduction apparatus (audio reproduction apparatus 3) as an information processing device, the synchronization information received by the synchronization information management unit (control unit 34) may be information on the amount of accumulation in the second buffer memory (reproduction data buffer memory 43) included in the other reproduction apparatus (tactile reproduction apparatus 4) to temporarily stores the second reproduction data (tactile data), and the reproduction data management unit (control unit 34) may duplicate the first reproduction data (audio data) when the synchronization information management unit has received information indicating that the amount of accumulation in the second buffer memory is less than the third threshold value as the synchronization information.

Accordingly, the first reproduction data can be reproduced when the amount of the second reproduction data accumulated in the second buffer memory has decreased below the third threshold value.

Therefore, it is possible to perform reproduction in accordance with the reproduction state of the other reproduction apparatus.

As described in each example, in the reproduction apparatus (audio reproduction apparatus 3) as an information processing device, the synchronization information received by the synchronization information management unit (control unit 34) may be information on the amount of accumulation in the second buffer memory (reproduction data buffer memory 43) included in the other reproduction apparatus (tactile reproduction apparatus 4) to temporarily stores the second reproduction data (tactile data), and the reproduction data management unit (control unit 34) may discard the first reproduction data (audio data) when the synchronization information management unit has received information indicating that the amount of accumulation in the second buffer memory equal to or greater than the fourth threshold value as the synchronization information.

Accordingly, the first reproduction data can be reproduced when the amount of the second reproduction data accumulated in the second buffer memory has reached or exceeded the fourth threshold value.

Therefore, it is possible to perform reproduction in accordance with the reproduction state of the other reproduction apparatus.

As described in each example, in the reproduction apparatus (audio reproduction apparatus 3) as an information processing device, the reproduction data management unit (control unit 34) may receive duplication information and discarding information on the second reproduction data (tactile data) received from the other reproduction apparatus (tactile reproduction apparatus 4), duplicate the first reproduction data to be reproduced in synchronization with the second reproduction data that is a duplication target when the duplication information has been received, and discard the first reproduction data to be reproduced in synchronization with the second reproduction data that is a discarding target when the discarding information has been received. Accordingly, duplication and discarding of the first reproduction data are performed in synchronization with the second reproduction data.

Therefore, even if one of the first reproduction data and the second reproduction data runs short or is about to overflow in the buffer memory, reproduction can be performed while maintaining the synchronized state of the first reproduction data and the second reproduction data, and it is possible to prevent the user from feeling discomfort or disorder.

As described in each example, in the reproduction apparatus (audio reproduction apparatus 3) as an information processing device, the reproduction data reception unit (communication processing unit 31) may receive control information regarding the first reproduction data (audio data), and the reproduction data management unit (control unit 34) may duplicate and discard the first reproduction data on the basis of the control information.

Accordingly, it is possible to manage the amount of the first reproduction data accumulated in the first buffer memory on the basis of the control information, thereby contributing to appropriate reproduction processing.

As described in each example, in the reproduction apparatus (audio reproduction apparatus 3) as an information processing device, the control information may be information indicating permission/non-permission for at least one of duplication or discarding of the first reproduction data (audio data).

The first reproduction data is data having a predetermined reproduction time length (for example, several microseconds to several hundred milliseconds). With this configuration, it is determined whether or not duplication or discarding is appropriate for each piece of first reproduction data.

That is, only first reproduction data that has been determined to have no problem even if it is duplicated or discarded becomes a target for duplication or discarding. Accordingly, for example, when the first reproduction data stored in the first buffer memory (reproduction data buffer memory 33) is reduced and thus the first reproduction data is duplicated, duplication is performed while avoiding first reproduction data, which causes a sense of discomfort or disorder during reproduction when duplicated. Therefore, it is possible to reproduce the first reproduction data without causing the user to feel discomfort or disorder.

As described in each example, in the reproduction apparatus (audio reproduction apparatus 3) as an information processing device, the synchronization information management unit (control unit 34) may transmit information on the amount of the first reproduction data (audio data) accumulated in the first buffer memory (reproduction data buffer memory 33) to the other reproduction apparatus (tactile reproduction apparatus 4) as synchronization information. Accordingly, the other reproduction apparatus can perform reproduction processing based on the amount of accumulation of the first reproduction data. In particular, it is possible to duplicate or discard the second reproduction data in the other reproduction apparatus in accordance with the situation of duplicating or discarding the first reproduction data. Therefore, even if the amount of the first reproduction data accumulated in the first buffer memory fluctuates, a state in which the first reproduction data (audio data) and the second reproduction data (tactile data) are reproduced in synchronization can be continued.

As described in processing example 4 of the reproduction apparatus, in the reproduction apparatus (audio reproduction apparatus 3) as an information processing device, the reproduction data management unit (control unit 34) may reuse the first reproduction data (audio data) instead of duplicating the first reproduction data.

Accordingly, processing of duplicating the first reproduction data is not performed.

Therefore, it is possible to eliminate the processing burden in duplicating the first reproduction data.

As described in each of the above-described examples, the synchronous reproduction system 1 as an information processing system may include the transmission apparatus 2 that transmits the first reproduction data (audio data) and the second reproduction data (tactile data), a first reproduction apparatus (audio reproduction apparatus 3) that reproduces the first reproduction data, and a second reproduction apparatus (tactile reproduction apparatus 4) that reproduces the second reproduction data (tactile data).

In addition, the first reproduction apparatus may include a first reproduction data reception unit (communication processing unit 31) that receives the first reproduction data, and a first synchronization information management unit (control unit 34) that receives synchronization information from the second reproduction apparatus, and a first reproduction processing unit (reproduction processing unit 35) that reproduces the first reproduction data on the basis of the received synchronization information.

Further, the second reproduction apparatus may include a second reproduction data reception unit (communication processing unit 41) that receives the second reproduction data, a second synchronization information management unit (control unit 44) that receives synchronization information from the first reproduction apparatus, and a second reproduction processing unit (reproduction processing unit 45) that reproduces the second reproduction data on the basis of the received synchronization information.

With such a configuration, the amounts of accumulation of the first reproduction data and the second reproduction data are appropriately managed. Further, synchronization information with respect to the amounts of accumulation is shared between the reproduction apparatuses. In addition, in each reproduction apparatus, reproduction data is duplicated or discarded on the basis of the synchronization information, and thus it is possible to provide the user with a synchronized stereoscopic reproduction environment while preventing sound skipping. Accordingly, the user can obtain satisfactory user experience.

In the synchronous reproduction system 1 as an information processing system, the transmission apparatus 2 may include the control information generation unit 22 that generates first control information (control information regarding audio data) as control information regarding whether or not duplication discarding of the first reproduction data (audio data) is permitted and second control information (control information regarding tactile data) as control information regarding whether or not duplication and discarding of the second reproduction data (tactile data) is permitted.

Accordingly, permission/non-permission of duplication and discarding of the first reproduction data and the second reproduction data is individually set. Therefore, when the first reproduction data is duplicated or discarded, it is sufficient to check the first control information regarding the first reproduction data, and thus processing efficiency can be improved.

As described in the processing example of the transmission apparatus, in the synchronous reproduction system 1 as an information processing system, when it is determined that duplication or discarding of at least one of the first reproduction data (audio data) and the second reproduction data (tactile data) that are reproduced in synchronization cannot be permitted, the control information generation unit 22 may generate control information indicating that duplication and discarding are not permitted as the first control information for the first reproduction data and generate control information indicating that duplication and discarding are not permitted as the second control information for the second reproduction data reproduced in synchronization with the first reproduction data.

Accordingly, when the first control information for the first reproduction data contains information for allowing duplication or discarding, the second control information for the second reproduction data reproduced in synchronization naturally contains information for allowing duplication or discarding. Therefore, since duplication or discarding of only one of the first reproduction data and the second reproduction data reproduced in synchronization is avoided, it is possible to maintain the state in which the first reproduction data and the second reproduction data are reproduced in synchronization even when the amount of the first reproduction data accumulated in the first buffer memory has changed or the amount of the second reproduction data accumulated in the second buffer memory has changed.

An information processing method executed by a reproduction apparatus (audio reproduction apparatus 3) as an information processing device performs processing of receiving first reproduction data (audio data), processing of receiving synchronization information from another reproduction apparatus (tactile reproduction apparatus 4) that reproduces second reproduction data (tactile data) in synchronization with the first reproduction data, and reproduction of the first reproduction data on the basis of the received synchronization information.

With such a configuration, it is possible to configure the audio reproduction apparatus 3 and the tactile reproduction apparatus 4 described above and to realize the synchronous reproduction system 1 including the audio reproduction apparatus 3 and the tactile reproduction apparatus 4. Therefore, the various effects described above can be obtained.

Note that the advantageous effects described in the present specification are merely exemplary and are not limited, and other advantageous effects may be obtained.

In addition, the above-mentioned examples can be combined in any way as long as the combination is not impossible.

### [Reference Signs List]

1 Synchronous reproduction system (information processing system)
2 Transmission apparatus
3 Audio reproduction apparatus (information processing device)
3 Audio reproduction apparatus (first reproduction apparatus)
4 Tactile reproduction apparatus (second reproduction apparatus)
22 Control information generation unit
31 Communication processing unit (reproduction data reception unit)
31 Communication processing unit (first reproduction data reception unit)
33 Reproduction data buffer memory (first buffer memory)
34 Control unit (synchronization information management unit)
34 Control unit (first synchronization information management unit)
34 Control unit (reproduction data management unit)
34 Control unit (first reproduction data management unit)
35 Reproduction processing unit (first reproduction processing unit)
41 Communication processing unit (second reproduction data reception unit)
43 Reproduction data buffer memory (second buffer memory)
44 Control unit (second synchronization information management unit)
44 Control unit (second reproduction data management unit)
45 Reproduction processing unit (second reproduction processing unit)

## Claims

1. An information processing device comprising:
a reproduction data reception unit (32) configured to receive first reproduction data and control information regarding the first reproduction data, wherein the control information is information indicating permission/non-permission for at least one of duplication or discarding of the first reproduction data;
a first buffer memory (33) configured to store the received first reproduction data and control information;
a synchronization information management unit (34) configured to receive synchronization information from another reproduction apparatus that reproduces second reproduction data in synchronization with the first reproduction data, wherein the synchronization information received by the synchronization information management unit is information regarding an amount of accumulation in a second buffer memory included in said another reproduction apparatus for temporarily storing the second reproduction data;
a reproduction data management unit (34) configured to duplicate or discard the first reproduction data stored in the first buffer memory based on the synchronization information received from said another reproduction apparatus; and
a reproduction processing unit (35) configured to reproduce the first reproduction data on the basis of the received synchronization information,
wherein the reproduction data management unit (34) is configured to duplicate any piece of the first reproduction data among the first reproduction data on the basis of the control information when an amount of accumulation in the first buffer memory is less than a first threshold value,
wherein the reproduction data management unit (34) is configured to discard any piece of the first reproduction data among the first reproduction data on the basis of the control information when the amount of accumulation in the first buffer memory is equal to or greater than a second threshold value,
wherein the reproduction data management unit (34) receives duplication information and discarding information on the second reproduction data received from said another reproduction apparatus, duplicates the first reproduction data to be reproduced in synchronization with the second reproduction data that is a duplication target when the duplication information has been received, and discards the first reproduction data to be reproduced in synchronization with the second reproduction data that is a discarding target when the discarding information has been received,
wherein the synchronization information management unit (34) transmits information on the amount of the first reproduction data accumulated in the first buffer memory to said another reproduction apparatus as synchronization information.

2. The information processing device according to claim 1, wherein the synchronization information received by the synchronization information management unit is information regarding a ratio of the amount of accumulation to a memory size of the second buffer memory.

3. The information processing device according to claim 1, wherein the synchronization information received by the synchronization information management unit is flag information indicating whether or not the amount of accumulation in the second buffer memory is equal to or greater than a threshold value or whether or not the amount is below the threshold value.

4. The information processing device according to any one of claims 1 to 3, wherein, when the synchronization information management unit receives information indicating that the amount of accumulation in the second buffer memory is less than a third threshold value as the synchronization information, the reproduction data management unit duplicates any piece of the first reproduction data among the first reproduction data on the basis of the control information.

5. The information processing device according to any one of claims 1 to 3, wherein, when the synchronization information management unit (34) receives information indicating that the amount of accumulation in the second buffer memory is equal to or greater than a fourth threshold value as the synchronization information, the reproduction data management unit discards any piece of the first reproduction data among the first reproduction data on the basis of the control information.

6. The information processing device according to any one of the previous claims, wherein the control information is information based on a perceptual feature amount representing a degree of user perception of duplication or discarding of the first reproduction data.

7. The information processing device according to any one of the previous claims, wherein the reproduction data management unit (34) reuses the first reproduction data instead of duplicating the first reproduction data.

8. An information processing system comprising:
a transmission apparatus configured to transmit first reproduction data and second reproduction data, wherein the transmission apparatus includes a control information generation unit configured to generate first control information as control information regarding whether or not duplication and discarding of the first reproduction data are permitted, and second control information as control information regarding whether or not duplication and discarding of the second reproduction data are permitted;
a first reproduction apparatus configured to reproduce the first reproduction data; and
a second reproduction apparatus configured to reproduce the second reproduction data,
wherein the first reproduction apparatus includes:
a first reproduction data reception unit configured to receive the first reproduction data and first control information regarding the first reproduction data,
a first buffer memory configured to store the received first reproduction data and control information regarding the first reproduction data;
a first synchronization information management unit configured to receive synchronization information from the second reproduction apparatus, wherein the synchronization information received by the first synchronization information management unit is information regarding an amount of accumulation in a second buffer memory included in the second reproduction apparatus for temporarily storing the second reproduction data;
a first reproduction data management unit configured to duplicate or discard the first reproduction data stored in the first buffer memory based on the synchronization information received from the second reproduction apparatus; and
a first reproduction processing unit configured to reproduce the first reproduction data on the basis of the synchronization information received by the first synchronization information management unit,
wherein the first reproduction data management unit is configured to duplicate any piece of the first reproduction data among the first reproduction data on the basis of the control information when an amount of accumulation in the first buffer memory is less than a first threshold value,
wherein the first reproduction data management unit is configured to discard any piece of the first reproduction data among the first reproduction data on the basis of the control information when the amount of accumulation in the first buffer memory is equal to or greater than a second threshold value,
wherein the first reproduction data management unit receives duplication information and discarding information on the second reproduction data received from the second reproduction apparatus, duplicates the first reproduction data to be reproduced in synchronization with the second reproduction data that is a duplication target when the duplication information has been received, and discards the first reproduction data to be reproduced in synchronization with the second reproduction data that is a discarding target when the discarding information has been received,
wherein the first synchronization information management unit transmits information on the amount of the first reproduction data accumulated in the first buffer memory to the second reproduction apparatus as synchronization information, and
the second reproduction apparatus includes:
a second reproduction data reception unit configured to receive the second reproduction data and the second control information regarding the second reproduction data,
a second buffer memory configured to store the received second reproduction data and control information regarding the second reproduction data;
a second synchronization information management unit configured to receive synchronization information from the first reproduction apparatus, and transmit synchronization information on amount of the second reproduction data accumulated in the second buffer memory to the first reproduction apparatus;
a second reproduction data management unit configured to duplicate or discard the second reproduction data stored in the second buffer memory; and
a second reproduction processing unit configured to reproduce the second reproduction data on the basis of the synchronization information received by the second synchronization information management unit,
wherein the second reproduction data management unit is configured to duplicate any piece of the second reproduction data among the second reproduction data on the basis of the control information when an amount of accumulation in the second buffer memory is less than a third threshold value,
wherein the second reproduction data management unit is configured to discard any piece of the second reproduction data among the second reproduction data on the basis of the control information when the amount of accumulation in the second buffer memory is equal to or greater than a fourth threshold value,
wherein the second reproduction data management unit receives duplication information and discarding information on the first reproduction data received from the first reproduction apparatus, duplicates the second reproduction data to be reproduced in synchronization with the first reproduction data that is a duplication target when the duplication information has been received, and discards the second reproduction data to be reproduced in synchronization with the first reproduction data that is a discarding target when the discarding information has been received,
wherein the second synchronization information management unit transmits information on the amount of the second reproduction data accumulated in the second buffer memory to the first reproduction apparatus as synchronization information.

## Patentansprüche

1. Informationsverarbeitungsvorrichtung, umfassend:
eine Wiedergabedatenempfangseinheit (32), die konfiguriert ist, um erste Wiedergabedaten und Steuerinformationen bezüglich der ersten Wiedergabedaten zu empfangen, wobei es sich bei den Steuerinformationen um Informationen handelt, die eine Erlaubnis/Nichterlaubnis für mindestens eines aus Duplizierung oder Verwerfen der ersten Wiedergabedaten angeben;
einen ersten Pufferspeicher (33), der konfiguriert ist, um die empfangenen ersten Wiedergabedaten und Steuerinformationen zu speichern;
eine Synchronisierungsinformationsverwaltungseinheit (34), die konfiguriert ist, um Synchronisierungsinformationen vor einem weiteren Wiedergabeeinrichtung zu empfangen, die zweite Wiedergabedaten synchron mit den ersten Wiedergabedaten wiedergibt, wobei die durch die Synchronisierungsinformationsverwaltungseinheit empfangenen Synchronisierungsinformationen Informationen bezüglich einer Akkumulationsmenge in einem zweiten Pufferspeicher sind, der in der weiteren Wiedergabeeinrichtung zum vorübergehenden Speichern der zweiten Wiedergabedaten eingeschlossen ist;
eine Wiedergabedatenverwaltungseinheit (34), die konfiguriert ist, um die in dem ersten Pufferspeicher gespeicherten ersten Wiedergabedaten basierend auf den von der weiteren Wiedergabeeinrichtung empfangenen Synchronisierungsinformationen zu duplizieren oder zu verwerfen; und
eine Wiedergabeverarbeitungseinheit (35), die konfiguriert ist, um die ersten Wiedergabedaten basierend auf den empfangenen Synchronisationsinformationen wiederzugeben,
wobei die Wiedergabedatenverwaltungseinheit (34) konfiguriert ist, um einen beliebigen Teil der ersten Wiedergabedaten unter den ersten Wiedergabedaten basierend auf den Steuerinformationen zu duplizieren, wenn eine Akkumulationsmenge in dem ersten Pufferspeicher kleiner als ein erster Schwellenwert ist,
wobei die Wiedergabedatenverwaltungseinheit (34) konfiguriert ist, um einen beliebigen Teil der ersten Wiedergabedaten unter den ersten Wiedergabedaten basierend auf den Steuerinformationen zu verwerfen, wenn die Akkumulationsmenge in dem ersten Pufferspeicher gleich oder größer als ein zweiter Schwellenwert ist,
wobei die Wiedergabedatenverwaltungseinheit (34) Duplizierungsinformationen und Verwerfungsinformationen über die von der weiteren Wiedergabeeinrichtung empfangenen zweiten Wiedergabedaten empfängt, die ersten wiederzugebenden Wiedergabedaten dupliziert, die synchron mit den zweiten Wiedergabedaten wiedergegeben werden sollen, die ein Duplizierungsziel sind, wenn die Duplizierungsinformationen empfangen wurden, und die ersten Wiedergabedaten verwirft, die synchron mit den zweiten Wiedergabedaten wiedergegeben werden sollen, die ein Verwerfungsziel sind, wenn die Verwerfungsinformationen empfangen wurden,
wobei die Synchronisierungsinformationsverwaltungseinheit (34) Informationen über die Menge der in dem ersten Pufferspeicher akkumulierten ersten Wiedergabedaten als Synchronisierungsinformationen zu der weiteren Wiedergabeeinrichtung überträgt.

2. Informationsverarbeitungsvorrichtung nach Anspruch 1, wobei die durch die Synchronisierungsinformationsverwaltungseinheit empfangenen Synchronisierungsinformationen Informationen bezüglich eines Verhältnisses der Akkumulationsmenge zu einer Speichergröße des zweiten Pufferspeichers sind.

3. Informationsverarbeitungsvorrichtung nach Anspruch 1, wobei die durch die Synchronisierungsinformationsverwaltungseinheit empfangenen Synchronisierungsinformationen Markierungsinformationen sind, die angeben, ob die Akkumulationsmenge in dem zweiten Pufferspeicher gleich oder größer als ein Schwellenwert ist oder nicht oder ob die Menge unter dem Schwellenwert liegt oder nicht.

4. Informationsverarbeitungsvorrichtung nach einem der Ansprüche 1 bis 3, wobei, wenn die Synchronisierungsinformationsverwaltungseinheit Informationen als Synchronisierungsinformationen empfängt, die angeben, dass die Akkumulationsmenge in dem zweiten Pufferspeicher kleiner als ein dritter Schwellenwert ist, die Wiedergabedatenverwaltungseinheit einen beliebigen Teil der ersten Wiedergabedaten unter den ersten Wiedergabedaten basierend auf den Steuerinformationen dupliziert.

5. Informationsverarbeitungsvorrichtung nach einem der Ansprüche 1 bis 3, wobei, wenn die Synchronisierungsinformationsverwaltungseinheit (34) als Synchronisierungsinformation Informationen empfängt, die angeben, dass die Akkumulationsmenge in dem zweiten Pufferspeicher gleich oder größer als ein vierter Schwellenwert ist, die Wiedergabedatenverwaltungseinheit einen beliebigen Teil der ersten Wiedergabedaten unter den ersten Wiedergabedaten basierend auf den Steuerinformationen verwirft.

6. Informationsverarbeitungsvorrichtung nach einem der vorstehenden Ansprüche, wobei es sich bei den Steuerinformationen um Informationen handelt, die auf einer Wahrnehmungsmerkmalmenge basieren, die einen Grad von Benutzerwahrnehmung der Duplizierung oder des Verwerfens der ersten Reproduktionsdaten darstellen.

7. Informationsverarbeitungsvorrichtung nach einem der vorstehenden Ansprüche, wobei die Wiedergabedatenverwaltungseinheit (34) die ersten Wiedergabedaten anstelle des Duplizierens der ersten Wiedergabedaten die ersten Wiedergabedaten wiederverwendet.

8. Informationsverarbeitungssystem, umfassend:
eine Übertragungseinrichtung, die konfiguriert ist, um erste Wiedergabedaten und zweite Wiedergabedaten zu übertragen, wobei die Übertragungseinrichtung eine Steuerinformationserzeugungseinheit einschließt, die konfiguriert ist, um erste Steuerinformationen als Steuerinformationen darüber, ob die Duplizierung und das Verwerfen der ersten Wiedergabedaten zulässig ist oder nicht, und zweite Steuerinformationen als Steuerinformationen zu erzeugen, ob die Duplizierung und das Verwerfen der zweiten Wiedergabedaten zulässig ist oder nicht;
eine erste Wiedergabeeinrichtung, die konfiguriert ist, um die ersten Wiedergabedaten wiederzugeben; und
eine zweite Wiedergabeeinrichtung, die konfiguriert ist, um die zweiten Wiedergabedaten wiederzugeben,
wobei die erste Wiedergabeeinrichtung einschließt:
eine erste Wiedergabedatenempfangseinheit, die konfiguriert ist, um die ersten Wiedergabedaten und erste Steuerinformationen bezüglich der ersten Wiedergabedaten zu empfangen,
einen ersten Pufferspeicher, der konfiguriert ist, um die empfangenen ersten Wiedergabedaten und Steuerinformationen bezüglich der ersten Wiedergabedaten zu speichern;
eine erste Synchronisierungsinformationsverwaltungseinheit, die konfiguriert ist, um Synchronisierungsinformationen von der zweiten Wiedergabeeinrichtung zu empfangen, wobei die durch die erste Synchronisierungsinformationsverwaltungseinheit empfangenen Synchronisierungsinformationen Informationen bezüglich einer Akkumulationsmenge in einem zweiten Pufferspeicher sind, der in der zweiten Wiedergabeeinrichtung zum vorübergehenden Speichern der zweiten Wiedergabedaten eingeschlossen ist;
eine erste Wiedergabedatenverwaltungseinheit, die konfiguriert ist, um die in dem ersten Pufferspeicher gespeicherten ersten Wiedergabedaten basierend auf den von der zweiten Wiedergabeeinrichtung empfangenen Synchronisierungsinformationen zu duplizieren oder zu verwerfen; und
eine erste Wiedergabeverarbeitungseinheit, die konfiguriert ist, um die ersten Wiedergabedaten basierend auf den durch die erste Synchronisationsinformationsverwaltungseinheit empfangenen Synchronisationsinformationen wiederzugeben,
wobei die erste Wiedergabedatenverwaltungseinheit konfiguriert ist, um einen beliebigen Teil der ersten Wiedergabedaten unter den ersten Wiedergabedaten basierend auf den Steuerinformationen zu duplizieren, wenn eine Akkumulationsmenge in dem ersten Pufferspeicher kleiner als ein erster Schwellenwert ist,
wobei die erste Wiedergabedatenverwaltungseinheit konfiguriert ist, um einen beliebigen Teil der ersten Wiedergabedaten unter den ersten Wiedergabedaten basierend auf den Steuerinformationen zu verwerfen, wenn die Akkumulationsmenge in dem ersten Pufferspeicher gleich oder größer als ein zweiter Schwellenwert ist,
wobei die Wiedergabedatenverwaltungseinheit Duplizierungsinformationen und Verwerfungsinformationen über die von der zweiten Wiedergabeeinrichtung empfangenen zweiten Wiedergabedaten empfängt, die ersten wiederzugebenden Wiedergabedaten dupliziert, die synchron mit den zweiten Wiedergabedaten wiedergegeben werden sollen, die ein Duplizierungsziel sind, wenn die Duplizierungsinformationen empfangen wurden, und die ersten Wiedergabedaten verwirft, die synchron mit den zweiten Wiedergabedaten wiedergegeben werden sollen, die ein Verwerfungsziel sind, wenn die Verwerfungsinformationen empfangen wurden,
wobei die erste Synchronisierungsinformationsverwaltungseinheit Informationen über die Menge der in dem ersten Pufferspeicher akkumulierten ersten Wiedergabedaten als Synchronisierungsinformationen zu der zweiten Wiedergabeeinrichtung überträgt. und
die zweite Wiedergabeeinrichtung einschließt:
eine zweite Wiedergabedatenempfangseinheit, die konfiguriert ist, um die zweiten Wiedergabedaten und die zweiten Steuerinformationen bezüglich der zweiten Wiedergabedaten zu empfangen,
einen zweiten Pufferspeicher, der konfiguriert ist, um die empfangenen zweiten Wiedergabedaten und Steuerinformationen bezüglich der zweiten Wiedergabedaten zu speichern;
eine zweite Synchronisierungsinformationsverwaltungseinheit, die konfiguriert ist, um Synchronisierungsinformationen von der ersten Wiedergabeeinrichtung zu empfangen und Synchronisierungsinformationen über die Menge der in dem zweiten Pufferspeicher akkumulierten zweiten Wiedergabedaten zu der ersten Wiedergabeeinrichtung zu übertragen;
eine zweite Wiedergabedatenverwaltungseinheit, die konfiguriert ist, um die in dem zweiten Pufferspeicher gespeicherten zweiten Wiedergabedaten zu duplizieren oder zu verwerfen; und
eine zweite Wiedergabeverarbeitungseinheit, die konfiguriert ist, um die zweiten Wiedergabedaten basierend auf den durch die zweite Synchronisationsinformationsverwaltungseinheit empfangenen Synchronisationsinformationen wiederzugeben,
wobei die zweite Wiedergabedatenverwaltungseinheit konfiguriert ist, um einen beliebigen Teil der zweiten Wiedergabedaten unter den zweiten Wiedergabedaten basierend auf den Steuerinformationen zu duplizieren, wenn eine Akkumulationsmenge in dem zweiten Pufferspeicher kleiner als ein dritter Schwellenwert ist,
wobei die zweite Wiedergabedatenverwaltungseinheit konfiguriert ist, um einen beliebigen Teil der zweiten Wiedergabedaten unter den zweiten Wiedergabedaten basierend auf den Steuerinformationen zu verwerfen, wenn die Akkumulationsmenge in dem zweiten Pufferspeicher gleich oder größer als ein vierter Schwellenwert ist,
wobei die zweite Wiedergabedatenverwaltungseinheit Duplizierungsinformationen und Verwerfungsinformationen über die von der ersten Wiedergabeeinrichtung empfangenen ersten Wiedergabedaten empfängt, die zweiten Wiedergabedaten dupliziert, die synchron mit den ersten Wiedergabedaten wiedergegeben werden sollen, die ein Duplizierungsziel sind, wenn die Duplizierungsinformationen empfangen wurden, und die zweiten Wiedergabedaten verwirft, die synchron mit den ersten Wiedergabedaten wiedergegeben werden sollen, die ein Verwerfungsziel sind, wenn die Verwerfungsinformationen empfangen wurden,
wobei die zweite Synchronisationsinformationsverwaltungseinheit Informationen über die Menge der in dem zweiten Pufferspeicher akkumulierten zweiten Wiedergabedaten als Synchronisationsinformationen zu der zweiten Wiedergabeeinrichtung überträgt.

## Revendications

1. Dispositif de traitement d'informations comprenant :
une unité de réception de données de reproduction (32) configurée pour recevoir des premières données de reproduction et des informations de commande concernant les premières données de reproduction, dans lequel les informations de commande sont des informations indiquant l'autorisation/le refus pour au moins l'une parmi la duplication ou l'élimination des premières données de reproduction ;
une première mémoire tampon (33) configurée pour stocker les premières données de reproduction et les informations de commande reçues ;
une unité de gestion d'informations de synchronisation (34) configurée pour recevoir des informations de synchronisation en provenance d'un autre appareil de reproduction qui reproduit des secondes données de reproduction en synchronisation avec les premières données de reproduction, dans lequel les informations de synchronisation reçues par l'unité de gestion d'informations de synchronisation sont des informations concernant une quantité d'accumulation dans une seconde mémoire tampon incluse dans ledit autre appareil de reproduction pour le stockage temporaire des secondes données de reproduction ;
une unité de gestion de données de reproduction (34) configurée pour dupliquer ou éliminer les premières données de reproduction stockées dans la première mémoire tampon en fonction des informations de synchronisation reçues en provenance dudit autre appareil de reproduction ; et
une unité de traitement de reproduction (35) configurée pour reproduire les premières données de reproduction sur la base des informations de synchronisation reçues,
dans lequel l'unité de gestion de données de reproduction (34) est configurée pour dupliquer n'importe quelle partie des premières données de reproduction parmi les premières données de reproduction sur la base des informations de commande lorsqu'une quantité d'accumulation dans la première mémoire tampon est inférieure à une première valeur seuil,
dans lequel l'unité de gestion de données de reproduction (34) est configurée pour éliminer n'importe quelle partie des premières données de reproduction parmi les premières données de reproduction sur la base des informations de commande lorsque la quantité d'accumulation dans la première mémoire tampon est égale ou supérieure à une deuxième valeur seuil,
dans lequel l'unité de gestion de données de reproduction (34) reçoit des informations de duplication et des informations d'élimination concernant les secondes données de reproduction reçues en provenance dudit autre appareil de reproduction, duplique les premières données de reproduction à reproduire en synchronisation avec les secondes données de reproduction qui sont une cible de duplication lorsque les informations de duplication ont été reçues, et élimine les premières données de reproduction à reproduire en synchronisation avec les secondes données de reproduction qui sont une cible d'élimination lorsque les informations d'élimination ont été reçues,
dans lequel l'unité de gestion d'informations de synchronisation (34) transmet des informations concernant la quantité des premières données de reproduction accumulées dans la première mémoire tampon audit autre appareil de reproduction en tant qu'informations de synchronisation.

2. Dispositif de traitement d'informations selon la revendication 1, dans lequel les informations de synchronisation reçues par l'unité de gestion d'informations de synchronisation sont des informations concernant un rapport entre la quantité d'accumulation et une taille de mémoire de la seconde mémoire tampon.

3. Dispositif de traitement d'informations selon la revendication 1, dans lequel les informations de synchronisation reçues par l'unité de gestion d'informations de synchronisation sont des informations de signalement indiquant si la quantité d'accumulation dans la seconde mémoire tampon est égale ou supérieure à une valeur seuil ou si la quantité est inférieure à la valeur seuil.

4. Dispositif de traitement d'informations selon l'une quelconque des revendications 1 à 3, dans lequel, lorsque l'unité de gestion d'informations de synchronisation reçoit des informations indiquant que la quantité d'accumulation dans la seconde mémoire tampon est inférieure à une troisième valeur seuil en tant qu'informations de synchronisation, l'unité de gestion de données de reproduction duplique n'importe quelle partie des premières données de reproduction parmi les premières données de reproduction sur la base des informations de commande.

5. Dispositif de traitement d'informations selon l'une quelconque des revendications 1 à 3, dans lequel, lorsque l'unité de gestion d'informations de synchronisation (34) reçoit des informations indiquant que la quantité d'accumulation dans la seconde mémoire tampon est égale ou supérieure à une quatrième valeur seuil en tant qu'informations de synchronisation, l'unité de gestion de données de reproduction élimine n'importe quelle partie des premières données de reproduction parmi les premières données de reproduction sur la base des informations de commande.

6. Dispositif de traitement d'informations selon l'une quelconque des revendications précédentes, dans lequel les informations de commande sont des informations basées sur une quantité de caractéristiques perceptuelles représentant un degré de perception par l'utilisateur de la duplication ou de l'élimination des premières données de reproduction.

7. Dispositif de traitement d'informations selon l'une quelconque des revendications précédentes, dans lequel l'unité de gestion de données de reproduction (34) réutilise les premières données de reproduction au lieu de dupliquer les premières données de reproduction.

8. Système de traitement d'informations comprenant :
un appareil de transmission configuré pour transmettre des premières données de reproduction et des secondes données de reproduction, dans lequel l'appareil de transmission comporte une unité de génération d'informations de commande configurée pour générer des premières informations de commande en tant qu'informations de commande concernant l'autorisation ou le refus de la duplication et de l'élimination des premières données de reproduction, et des secondes informations de commande en tant qu'informations de commande concernant l'autorisation ou le refus de la duplication et de l'élimination des secondes données de reproduction ;
un premier appareil de reproduction configuré pour reproduire les premières données de reproduction ; et
un second appareil de reproduction configuré pour reproduire les secondes données de reproduction,
dans lequel le premier appareil de reproduction comporte :
une première unité de réception de données de reproduction configurée pour recevoir les premières données de reproduction et les premières informations de commande concernant les premières données de reproduction,
une première mémoire tampon configurée pour stocker les premières données de reproduction et les informations de commande concernant les premières données de reproduction reçues ;
une première unité de gestion d'informations de synchronisation configurée pour recevoir des informations de synchronisation en provenance du second appareil de reproduction, dans lequel les informations de synchronisation reçues par la première unité de gestion d'informations de synchronisation sont des informations concernant une quantité d'accumulation dans une seconde mémoire tampon incluse dans le second appareil de reproduction pour le stockage temporaire des secondes données de reproduction ;
une première unité de gestion de données de reproduction configurée pour dupliquer ou éliminer les premières données de reproduction stockées dans la première mémoire tampon en fonction des informations de synchronisation reçues en provenance du second appareil de reproduction ; et
une première unité de traitement de reproduction configurée pour reproduire les premières données de reproduction sur la base des informations de synchronisation reçues par la première unité de gestion d'informations de synchronisation,
dans lequel l'unité de gestion de premières données de reproduction est configurée pour dupliquer n'importe quelle partie des premières données de reproduction parmi les premières données de reproduction sur la base des informations de commande lorsqu'une quantité d'accumulation dans la première mémoire tampon est inférieure à une première valeur seuil,
dans lequel l'unité de gestion de premières données de reproduction est configurée pour éliminer n'importe quelle partie des premières données de reproduction parmi les premières données de reproduction sur la base des informations de commande lorsque la quantité d'accumulation dans la première mémoire tampon est égale ou supérieure à une deuxième valeur seuil,
dans lequel l'unité de gestion de premières données de reproduction reçoit des informations de duplication et des informations d'élimination concernant les secondes données de reproduction reçues en provenance du second appareil de reproduction, duplique les premières données de reproduction à reproduire en synchronisation avec les secondes données de reproduction qui sont une cible de duplication lorsque les informations de duplication ont été reçues, et élimine les premières données de reproduction à reproduire en synchronisation avec les secondes données de reproduction qui sont une cible d'élimination lorsque les informations d'élimination ont été reçues,
dans lequel la première unité de gestion d'informations de synchronisation transmet des informations concernant la quantité des premières données de reproduction accumulées dans la première mémoire tampon au second appareil de reproduction en tant qu'informations de synchronisation, et
le second appareil de reproduction comporte :
une unité de réception de secondes données de reproduction configurée pour recevoir les secondes données de reproduction et les secondes informations de commande concernant les secondes données de reproduction,
une seconde mémoire tampon configurée pour stocker les secondes données de reproduction et les informations de commande concernant les secondes données de reproduction reçues ;
une seconde unité de gestion d'informations de synchronisation configurée pour recevoir des informations de synchronisation en provenance du premier appareil de reproduction et pour transmettre au premier appareil de reproduction des informations de synchronisation concernant la quantité des secondes données de reproduction accumulées dans la seconde mémoire tampon ;
une unité de gestion de secondes données de reproduction configurée pour dupliquer ou éliminer les secondes données de reproduction stockées dans la seconde mémoire tampon ; et
une seconde unité de traitement de reproduction configurée pour reproduire les secondes données de reproduction sur la base des informations de synchronisation reçues par la seconde unité de gestion d'informations de synchronisation,
dans lequel l'unité de gestion de secondes données de reproduction est configurée pour dupliquer n'importe quelle partie des secondes données de reproduction parmi les secondes données de reproduction sur la base des informations de commande lorsqu'une quantité d'accumulation dans la seconde mémoire tampon est inférieure à une troisième valeur seuil,
dans lequel l'unité de gestion de secondes données de reproduction est configurée pour éliminer n'importe quelle partie des secondes données de reproduction parmi les secondes données de reproduction sur la base des informations de commande lorsque la quantité d'accumulation dans la seconde mémoire tampon est égale ou supérieure à une quatrième valeur seuil,
dans lequel l'unité de gestion de secondes données de reproduction reçoit des informations de duplication et des informations d'élimination concernant les premières données de reproduction reçues en provenance du premier appareil de reproduction, duplique les secondes données de reproduction à reproduire en synchronisation avec les premières données de reproduction qui sont une cible de duplication lorsque les informations de duplication ont été reçues, et élimine les secondes données de reproduction à reproduire en synchronisation avec les premières données de reproduction qui sont une cible d'élimination lorsque les informations d'élimination ont été reçues,
dans lequel la seconde unité de gestion d'informations de synchronisation transmet des informations concernant la quantité des secondes données de reproduction accumulées dans la seconde mémoire tampon au premier appareil de reproduction en tant qu'informations de synchronisation.
